# EUROPÄISCHE PATENTSCHRIFT

(11) **EP 4 377 624 B1**
(45) Veröffentlichungstag und Bekanntmachung des Hinweises auf die Patenterteilung: **16.09.2026**
(21) Anmeldenummer: 22757895.2
(22) Anmeldetag: 26.07.2022
(51) Int. Cl.: F28D 7/16, F28B 9/10, F28B 9/08

(54) **WÄRMETAUSCHER, VERFAHREN ZUM BETREIBEN EINES WÄRMETAUSCHERS UND PROZESSWASSERDESTILLATIONSANLAGE**
HEAT EXCHANGER, METHOD FOR OPERATING A HEAT EXCHANGER, AND PROCESS WATER DISTILLATION PLANT
ÉCHANGEUR DE CHALEUR, PROCÉDÉ DE FONCTIONNEMENT D'UN ÉCHANGEUR DE CHALEUR, ET INSTALLATION DE DISTILLATION D'EAU DE TRAITEMENT

(30) Priorität: 30.07.2021 DE 102021119867
(43) Veröffentlichungstag der Anmeldung: 05.06.2024
(73) Patentinhaber: KMU LOFT Cleanwater SE, 72138 Kirchentellinsfurt (DE)
(72) Erfinder: SCHNELL, Manfred, 79650 Schopfheim (DE); BRAUN, Juergen, 72149 Neustetten (DE)
(74) Vertreter: Schicker, Silvia
(86) Internationale Anmeldenummer: PCT/EP2022/070971
(87) Internationale Veröffentlichungsnummer: WO 2023/006763

(56) Entgegenhaltungen:
- EP-A1- 0 854 129
- EP-A2- 1 775 265
- CN-A- 102 309 868
- JP-A- 2014 020 723

## Beschreibung

Die Erfindung betrifft einen Wärmetauscher, der zum Einsatz in einer Prozesswasserdestillationsanlage geeignet ist. Ferner betrifft die Erfindung ein Verfahren zum Betreiben eines derartigen Wärmetauschers sowie eine mit einem derartigen Wärmetauscher ausgestattete Prozesswasserdestillationsanlage.

Die Aufbereitung von industriellen Abwässern durch Vakuumdestillation stellt ein effektives und gleichzeitig wirtschaftliches Verfahren zur Reinigung verunreinigter Flüssigkeiten dar, die beispielsweise als Waschlösungen in Tauch-, Spritz- und Ultraschallreinigungsanlagen, als Prozesslösungen bei Oberflächenveredelungsverfahren, wie z.B. Galvanisieren, Beizen, Anodisieren, Gleitschleifen, Entfetten, Phosphatieren, Brünieren, Pulverbeschichten oder Lackieren, oder bei Bohr-, Schneid-, Schleif- und Ziehanwendungen sowie beim Druckgießen anfallen. Diese Flüssigkeiten können beispielsweise durch Lösungsmittel, Öle, Wachse, Hydraulikflüssigkeiten und/oder Kühlmittel verunreinigt sein.

Aus der DE 10 2005 049 923 B4 und der EP 1 775 265 A2 ist eine Destillationsanlage zum Reinigen von industriell verunreinigtem Abwasser/Prozesswasser bekannt. Die Destillationsanlage umfasst einen Behälter mit einer Verdampfer-/Kondensatoreinheit, sowie einen Brüdenverdichter, der für die zur Verdampfung/Kondensation notwendigen Druckverhältnisse in der Destillationsanlage sorgt. Die Verdampfereinheit dient dazu, in den Behälter zugeführte verunreinigte Flüssigkeit zu verdampfen, wobei sich unerwünschte Bestandteile, wie z.B. Silikone, Siloxane, Glykole, Wachse, Öle, Amine, Emulgatoren, Tenside, Salze, etc. in einem Verdampfersumpf in einem Bodenbereich des Behälters sammeln. Gereinigter Wasserdampf steigt dagegen in dem Behälter auf und wird mittels des Brüdenverdichters oberhalb eines Nebelabscheiders zunächst aus dem Behälter gesaugt und anschließend in die wiederum innerhalb des Behälters liegende Kondensatoreinheit gefördert. In der Kondensatoreinheit kondensiert der Wasserdampf zu gereinigtem Destillat, das schließlich noch einem Destillatkühler zugeführt wird. Der Destillatkühler dient gleichzeitig als Vorwärmer für die in den Behälter bzw. die Verdampfereinheit zuzuführende verunreinigte Flüssigkeit.

Die JP 2014 020723 A offenbart einen Verdampfer zum Wärmeaustausch zwischen einem flüssigen Kältemittel und warmem Wasser. In dem Verdampfer fließt das warme Wasser durch in einem Behälter angeordnete, horizontal verlaufende Rohre.

Das vorab verflüssigte Kältemittel wird durch einen Einlass von oben auf die Rohre geleitet und kühlt das in den Rohren fließende Wasser ab. Hierbei wird ein Teil des flüssigen Kältemittels verdampft, ein anderer Teil verbleibt im flüssigen Zustand. Das verdampfte Kältemittel wird durch ein oben am Behälter angeordnetes Auslassrohr abgeführt, während das übrige flüssige Kältemittel durch ein unten am Behälter angeordnetes Auslassrohr abgeleitet wird.

Die EP 0 854 129 A1 beschreibt ein Verfahren zur kontinuierlichen destillativen Auftrennung von flüssigen Gemischen, die als Hauptbestandteil Methacrylsäure enthalten. Bei der Verdampfung von Methacrylsäure bilden sich üblicherweise Rückstände auf der Verdampferoberfläche. Die EP 0 854 129 A1 sieht daher vor, dass ein Teil des in einer Destillierblase vorhandenen Gemischs kontinuierlich entnommen und in einem Röhrenverdampfer unter hohem Druck erhitzt wird. Zum Erhitzen des flüssigen Gemischs in Rohren des Röhrenverdampfers wird Heizdampf zugeführt, der um die Rohre strömt, wobei ein Sieden des Gemischs in den Rohren des Röhrenverdampfers unterdrückt wird, so dass der Röhrenverdampfer lediglich als Überhitzer fungiert.

Aus der CN 102 309 868 A ist eine Recyclingvorrichtung für organisches Lösungsmittelkonzentrat bekannt, die einen Rohbündelkondensator umfasst.

Die Erfindung ist auf die Aufgabe gerichtet, einen zum Einsatz als Prozesswasservorwärmer/Destillatkühler in einer Prozesswasserdestillationsanlage geeigneten Wärmetauscher anzugeben. Ferner ist die Erfindung auf die Aufgabe gerichtet, ein Verfahren zum Betreiben eines derartigen Wärmetauschers sowie eine mit einem derartigen Wärmetauscher ausgestattete Prozesswasserdestillationsanlage bereitzustellen.

Diese Aufgabe wird durch einen Wärmetauscher, ein Verfahren zum betreiben eines Wärmetauschers und eine Prozesswasserdestillationsanlage gemäß den Ansprüchen 1, 10 bzw. 15 gelöst.

Ein zum Einsatz in einer Prozesswasserdestillationsanlage geeigneter Wärmetauscher umfasst einen ersten Strömungsweg, der dazu eingerichtet ist, im Betrieb der Prozesswasserdestillationsanlage von einem zu erwärmenden ersten Fluid durchströmt zu werden sowie einen zweiten Strömungsweg, der dazu eingerichtet ist, im Betrieb der Prozesswasserdestillationsanlage von einem zu kühlenden zweiten Fluid durchströmt zu werden. Der zweite Strömungsweg steht zumindest abschnittsweise mit dem ersten Strömungsweg in Wärmekontakt, sodass im Betrieb des Wärmetauschers ein Wärmetransfer von dem den zweiten Strömungsweg durchströmenden zweiten Fluid an das den ersten Strömungsweg durchströmende erste Fluid erfolgt.

Das erste Fluid kann verschiedene Bestandteile, insbesondere Wasser sowie wasserlösliche oder wasserunlösliche Verunreinigungen enthalten. Wenn der Wärmetauscher in einer Prozesswasserdestillationsanlage verbaut ist, ist das erste Fluid vorzugsweise mithilfe der Prozesswasserdestillationsanlage zu reinigendes Prozesswasser. Das zweite Fluid enthält Bestandteile unterschiedlicher spezifischer Dichte. Beispielsweise kann das zweite Fluid aus einem Kondensator einer Prozesswasserdestillationsanlage austretendes Destillat sein und neben Wasser zusätzlich Leichtflüssigkeiten, wie z.B. Benzin, Benzol, Schmierstoffe oder Öle enthalten, die durch den Destillationsprozess nicht oder nicht vollständig aus dem Prozesswasser entfernt werden können. Der Wärmetauscher kann also beispielsweise als Prozesswasservorwärmer/Destillatkühler in einer Prozesswasserdestillationsanlage eingesetzt werden.

Der zweite Strömungsweg des Wärmetauschers ist so gestaltet, dass eine Strömung des zweiten Fluids bei der Zufuhr in den zweiten Strömungsweg und/oder beim Durchströmen des zweiten Strömungswegs beruhigt wird. Hierzu kann der zweite Strömungsweg beispielsweise so ausgestaltet sein, dass der zweite Strömungsweg einen größeren Strömungsquerschnitt aufweist als eine Zuleitung, durch die das zweite Fluid in den zweiten Strömungsweg des Wärmetauschers geleitet wird. Zusätzlich oder alternativ dazu kann der zweite Strömungsweg so ausgestaltet sein, dass sich eine Oberfläche des zweiten Fluids bei der Zufuhr des zweiten Fluids in den zweiten Strömungsweg vergrößert. Durch die bei der Zufuhr in den zweiten Strömungsweg und/oder beim Durchströmen des zweiten Strömungswegs erfolgende Beruhigung der Strömung des zweiten Fluids werden Turbulenzen abgebaut, sodass die Strömung des zweiten Fluids in dem zweiten Strömungsweg vorzugsweise im Wesentlichen laminar ist oder wird. Darüber hinaus kann die Strömungsgeschwindigkeit des zweiten Fluids bei der Zufuhr in den zweiten Strömungsweg und/oder beim Durchströmen des zweiten Strömungswegs verringert werden.

Durch die Beruhigung der Strömung des zweiten Fluids in dem zweiten Strömungsweg erfolgt, da das zweite Fluid Fluidkomponenten unterschiedlicher spezifische Dichte enthält, unter dem Einfluss der Schwerkraft eine Entmischung des zweiten Fluids. Insbesondere sammeln sich Fluidkomponenten geringerer spezifischer Dichte, wie z.B. Leichtflüssigkeitströpfchen an einer Oberfläche des zweiten Fluids und bilden dort eine Schwimmschicht. Der Wärmetauscher umfasst daher ferner eine Absaugvorrichtung, die dazu eingerichtet ist, eine Fluidkomponente, die sich von dem zweiten Fluid abscheidet und auf einer Oberfläche des zweiten Fluids eine Schwimmschicht bildet, während das zweite Fluid in den zweiten Strömungsweg zugeführt wird und/oder den zweiten Strömungsweg durchströmt, von der Oberfläche des zweiten Fluids in dem zweiten Strömungsweg abzusaugen.

Der Wärmetauscher erfüllt folglich nicht nur eine Wärmetauscher-, sondern auch eine Abscheiderfunktion und kann daher z.B. in einer Prozesswasserdestillationsanlage als kombinierter Wärmetauscher/Ölabscheider eingesetzt werden. Dadurch kann auf einen dem Wärmetauscher nachgelagerten separaten Ölabscheider verzichtet werden kann, sodass Kosten- und insbesondere Einbauraumersparnisse möglich werden.

Zumindest ein Abschnitt des zweiten Strömungswegs kann durch ein Innenvolumen eines Behälters definiert werden, in dem der erste Strömungsweg fluidisch von dem zweiten Strömungsweg getrennt angeordnet ist, sodass das den zweiten Strömungsweg durchströmende zweite Fluid den ersten Strömungsweg umströmt. Durch eine derartige Ausgestaltung des zweiten Strömungswegs kann sich in dem zweiten Strömungsweg eine große Oberfläche des zweiten Fluids ausbilden. Dies ist für die Beruhigung der Strömung des zweiten Fluids in dem zweiten Strömungsweg sowie die daraus resultierende Ausbildung einer aus einer Fluidkomponente geringerer spezifischer Dichte bestehenden Schwimmschicht vorteilhaft. Darüber hinaus sorgt die Umströmung des ersten Strömungswegs durch das zweite Fluid für einen optimalen Wärmetransfer zwischen dem ersten und dem zweiten Fluid. Vorzugsweise ist der erste Strömungsweg in einem unteren Bereich des Behälters angeordnet, sodass sichergestellt ist, dass der erste Strömungsweg bei ausreichendem Füllstand des zweiten Fluids in dem zweiten Strömungsweg, d. h. dem Innenvolumen des Behälters, vollständig von dem zweiten Fluid umströmt ist.

In zumindest einem Abschnitt des zweiten Strömungswegs kann eine Mehrzahl von Strömungslenkungselementen vorgesehen sein, die bezogen auf eine Hauptströmungsrichtung des zweiten Fluids durch den zweiten Strömungsweg hintereinander und in einer Richtung senkrecht zur Hauptströmungsrichtung des zweiten Fluids durch den zweiten Strömungsweg versetzt zueinander angeordnet sind. Durch die Strömungslenkungselemente wird eine um die Hauptströmungsrichtung mäandrierende resultierende Strömung des zweiten Fluids durch den zweiten Strömungsweg realisiert. Dadurch wird die von dem zweiten Fluid beim Durchströmen des zweiten Strömungswegs zurückgelegte Weglänge vergrößert und folglich der Wärmetransfer zwischen dem ersten Fluid und dem zweiten Fluid verbessert.

Der Begriff "Hauptströmungsrichtung" bezeichnet eine Richtung, die durch eine Verbindungslinie zwischen einem aufstromseitigen Ende des zweiten Strömungswegs und einem abstromseitigen Ende des zweiten Strömungswegs definiert wird. Die Begriffe "aufstromseitig" und "abstromseitig" beziehen sich jeweils auf eine Strömungsrichtung eines Fluids durch einen Strömungsweg. Beispielsweise bezeichnet der Ausdruck "auftromseitiges Ende des zweiten Strömungswegs" ein Ende des zweiten Strömungswegs durch das die Zufuhr des zweiten Fluids in den zweiten Strömungsweg erfolgt. In entsprechender Weise bezeichnet der Ausdruck "abstromseitiges Ende des zweiten Strömungswegs" ein Ende des zweiten Strömungswegs durch das das zweite Fluid nach dem Durchströmen des zweiten Strömungswegs aus dem zweiten Strömungsweg austritt.

Ein Zulauf des zweiten Strömungswegs kann so gestaltet und angeordnet sein, dass das in den zweiten Strömungsweg zugeführte zweite Fluid im Wesentlichen parallel zu einem Oberflächenspiegel des zweiten Fluids in dem zweiten Strömungsweg und/oder im Wesentlichen auf einer Höhe mit einem Oberflächenspiegel des zweiten Fluids in dem zweiten Strömungsweg in den zweiten Strömungsweg zugeführt wird. Beispielsweise kann der Zulauf des zweiten Strömungswegs in einem aufstromseitigen Bereich des zweiten Strömungswegs in einen oberen Bereich des Behälters münden, dessen Innenvolumen zumindest einen Abschnitt des zweiten Strömungswegs definiert.

Durch eine derartige Ausgestaltung und Anordnung des Zulaufs des zweiten Strömungswegs lässt sich ein "sanfter", wirbelfreier Einlauf des zweiten Fluids in den zweiten Strömungsweg realisieren. Dadurch wird die gewünschte Beruhigung der Strömung des zweiten Fluids in dem zweiten Strömungsweg und die Abscheidung der aus dem zweiten Fluid zu entfernenden Fluidkomponente gefördert. Darüber hinaus wird eine Durchmischung der aus dem zweiten Fluid zu entfernenden Fluidkomponente mit dem Rest des zweiten Fluids minimiert.

Ein Ablauf des zweiten Strömungswegs ist vorzugsweise so gestaltet und angeordnet, dass das zweite Fluid nach dem Durchströmen des zweiten Strömungswegs aus einem Sumpfbereich des zweiten Strömungswegs aus dem zweiten Strömungsweg abgeführt wird. Beispielsweise kann der Ablauf des zweiten Strömungswegs in einem abstromseitigen Bereich des zweiten Strömungswegs in einem Bodenbereich des Behälters angeordnet sein, dessen Innenvolumen zumindest einen Abschnitt des zweiten Strömungswegs definiert.

Durch eine Kombination eines im Bereich eines Oberflächenspiegels des zweiten Fluids in dem zweiten Strömungsweg angeordneten Zulaufs mit einem in einem Sumpfbereich des zweiten Strömungswegs angeordneten Ablauf kann ein Wärmestrom des den zweiten Strömungsweg durchströmenden zweiten Fluids realisiert werden, der in im Wesentlichen diagonaler Richtung von oben nach unten durch den zweiten Strömungsweg verläuft. Im Gegensatz dazu verläuft ein Wärmestrom des den ersten Strömungsweg durchströmenden ersten Fluids in diagonaler Richtung von unten nach oben.

Der zweite Strömungsweg, der Zulauf des zweiten Strömungswegs und der Ablauf des zweiten Strömungswegs können so gestaltet und angeordnet sein, dass das zweite Fluid den zweiten Strömungsweg entlang der gesamten Länge des zweiten Strömungswegs in einer gleichbleibenden Hauptströmungsrichtung durchströmt. Alternativ dazu kann in dem zweiten Strömungsweg aber auch eine Strömungsumlenkeinrichtung angeordnet sein, die dazu eingerichtet ist, die Strömung des zweiten Fluids durch den zweiten Strömungsweg derart umzulenken, dass das zweite Fluid den zweiten Strömungsweg entlang eines ersten Abschnitts des zweiten Strömungswegs in einer ersten Hauptströmungsrichtung und entlang eines zweiten Abschnitts des zweiten Strömungswegs in einer der ersten Hauptströmungsrichtung entgegengesetzten zweiten Hauptströmungsrichtung durchströmt. Eine Strömungsumkehr des zweiten Fluids in dem zweiten Strömungsweg ermöglicht eine Vergrößerung der von dem zweiten Fluid beim Durchströmen des zweiten Strömungswegs zurückgelegten Weglänge und damit einen verbesserten Wärmetransfer zwischen dem ersten Fluid und dem zweiten Fluid.

In einer Ausführungsform des Wärmetauschers, bei dem eine Strömungsumkehr des zweiten Fluids in dem zweiten Strömungsweg vorgesehen ist, mündet der Zulauf des zweiten Strömungswegs vorzugsweise in einem aufstromseitigen Bereich des ersten Abschnitts des zweiten Strömungswegs in einen oberen Bereich des Behälters, dessen Innenvolumen zumindest einen Abschnitt des zweiten Strömungswegs definiert. Der Ablauf des zweiten Strömungswegs ist dann vorzugsweise in einem abstromseitigen Bereich des zweiten Abschnitts des zweiten Strömungswegs in einem Bodenbereich des Behälters angeordnet, dessen Innenvolumen zumindest einen Abschnitt des zweiten Strömungswegs definiert.

Die Strömungsumlenkeinrichtung kann eine erste Trennplatte umfassen, die den zweiten Strömungsweg in den ersten Abschnitt und den zweiten Abschnitt unterteilt. Die erste Trennplatte ist vorzugsweise so gestaltet und angeordnet, dass ein aufstromseitiger Bereich des ersten Abschnitts des zweiten Strömungswegs und ein abstromseitiger Bereich des zweiten Abschnitts des zweiten Strömungswegs fluidisch voneinander getrennt sind. Zusätzlich oder alternativ dazu kann die Trennplatte so gestaltet und angeordnet sein, dass ein abstromseitiger Bereich des ersten Abschnitts des zweiten Strömungswegs und ein aufstromseitiger Bereich des zweiten Abschnitts des zweiten Strömungswegs fluidisch miteinander verbundenen sind. In dem Bereich des zweiten Strömungswegs, in dem eine Fluidverbindung zwischen dem ersten Abschnitt und dem zweiten Abschnitt besteht, kann dann die Strömungsumkehr des zweiten Fluids erfolgen.

Zumindest ein Abschnitt des ersten Strömungswegs wird vorzugsweise durch ein Innenvolumen einer Mehrzahl von im Wesentlichen parallel zueinander angeordneter Rohre definiert. Dadurch ergibt sich eine große Kontaktfläche mit dem den zweiten Strömungsweg durchströmenden zweiten Fluid und folglich einen guten Wärmetransfer zwischen dem ersten und dem zweiten Fluid.

Eine Strömungsrichtung des ersten Fluids durch den ersten Strömungsweg ist vorzugweise einer Hauptströmungsrichtung des zweiten Fluids durch den zweiten Strömungsweg entgegengerichtet, d. h. der Wärmetauscher arbeitet vorzugsweise im Gegenstrombetrieb. Ein Zulauf des ersten Strömungswegs kann in einen Bodenbereich einer Zulaufkammer münden, die ihrerseits mit einem aufstromseitigen Bereich des ersten Strömungswegs verbunden ist. Ein Ablauf des ersten Strömungswegs kann dagegen mit einem oberen Bereich einer Ablaufkammer verbunden sein, die ihrerseits mit einem abstromseitigen Bereich des ersten Strömungswegs verbunden ist.

Der erste Strömungsweg, die Zulaufkammer und die Ablaufkammer können so gestaltet und angeordnet sein, dass das erste Fluid den ersten Strömungsweg entlang der gesamten Länge des ersten Strömungswegs in einer gleichbleibenden Strömungsrichtung durchströmt. Dies ist insbesondere dann sinnvoll, wenn auch in dem zweiten Strömungsweg keine Umkehr der Strömungsrichtung des zweiten Fluids vorgesehen ist. Beispielsweise können die Zulaufkammer und die Ablaufkammer mit entgegengesetzten Enden des ersten Strömungswegs, insbesondere mit entgegengesetzten Enden der Rohre verbunden sein, deren Innenvolumen den ersten Strömungsweg definiert.

Alternativ dazu ist es jedoch auch denkbar, dass der erste Strömungsweg, die Zulaufkammer und die Ablaufkammer so gestaltet und angeordnet sind, dass das erste Fluid den ersten Strömungsweg entlang eines ersten Abschnitts des ersten Strömungswegs in einer ersten Strömungsrichtung und entlang eines zweiten Abschnitts des ersten Strömungswegs in einer der ersten Strömungsrichtung entgegengesetzten zweiten Strömungsrichtung durchströmt. Eine derartige Gestaltung des ersten Strömungswegs, der Zulaufkammer und der Ablaufkammer ist dann sinnvoll, wenn auch entlang des zweiten Strömungswegs eine Umkehr der Strömungsrichtung des zweiten Fluids vorgesehen ist. Dadurch kann das Gegenstromprinzip, bei dem die Strömungsrichtung des ersten Fluids durch den ersten Strömungsweg der Hauptströmungsrichtung des zweiten Fluids durch den zweiten Strömungsweg entgegengerichtet ist, beibehalten werden.

Beispielsweise können die Zulaufkammer und die Ablaufkammer in einer Richtung im Wesentlichen senkrecht zur ersten Strömungsrichtung des ersten Fluids entlang des ersten Abschnitts des ersten Strömungswegs und im Wesentlichen senkrecht zur zweiten Strömungsrichtung des ersten Fluids entlang des zweiten Abschnitts des ersten Strömungswegs übereinander angeordnet sein. Wenn der erste Strömungsweg durch das Innenvolumen einer Mehrzahl von im Wesentlichen parallel zueinander angeordneten Rohren definiert wird, wird der erste Abschnitt des ersten Strömungswegs dann vorzugsweise durch einen unteren Teil des Rohrbündels gebildet, während der zweite Abschnitt des ersten Strömungswegs durch einen oberen Teil des Rohrbündels gebildet werden kann.

Die Zulaufkammer und die Ablaufkammer können durch eine zweite Trennplatte fluidisch voneinander getrennt sein, sodass verhindert wird, dass das erste Fluid aus der Zulaufkammer in die Ablaufkammer gelangt, ohne den ersten Strömungsweg zu durchströmen. Die zweite Trennplatte ist vorzugsweise einstückig mit der ersten Trennplatte ausgebildet, die einen aufstromseitigen Bereich des ersten Abschnitts des zweiten Strömungswegs fluidisch von einem abstromseitigen Bereich des zweiten Abschnitts des zweiten Strömungswegs trennt.

Ein abstromseitiges Ende des ersten Abschnitts des ersten Strömungswegs und ein auftromseitiges Ende des zweiten Abschnitts des ersten Strömungswegs können jeweils mit einer Strömungsumlenkkammer verbunden sein, die so gestaltet und angeordnet sein kann, dass in der ersten Strömungsrichtung aus dem ersten Abschnitt des ersten Strömungswegs in die Strömungsumlenkkammer strömendes erstes Fluid umgelenkt und in der der ersten Strömungsrichtung entgegengesetzten zweiten Strömungsrichtung in den zweiten Abschnitt des ersten Strömungswegs geleitet wird. Beispielsweise können die Zulaufkammer und die Ablaufkammer einerseits und Strömungsumlenkkammer andererseits mit entgegengesetzten Enden des ersten Strömungswegs, insbesondere mit entgegengesetzten Enden der Rohre verbunden sein, deren Innenvolumen den ersten Strömungsweg definiert.

In einer bevorzugten Ausgestaltung des Wärmetauschers ist ein abstromseitiger Bereich des zweiten Strömungswegs mit einer Aufnahmekammer zur Aufnahme des aus dem zweiten Strömungsweg abgeführten zweiten Fluids verbunden. Die Aufnahmekammer kann einen ersten Abschnitt sowie einen stromabwärts des ersten Abschnitts angeordneten zweiten Abschnitt umfassen. Der erste Abschnitt der Aufnahmekammer kann durch eine Überlaufvorrichtung von dem zweiten Abschnitt der Aufnahmekammer getrennt sein, so dass aus dem zweiten Strömungsweg austretendes zweites Fluid stets zunächst in den ersten Abschnitt der Aufnahmekammer und erst anschließend über die Überlaufvorrichtung in den zweiten Abschnitt der Aufnahmekammer fließt.

Die Überlaufvorrichtung, d. h. die Ausgestaltung und Anordnung der Überlaufvorrichtung bestimmt den Füllstand des zweiten Strömungswegs, d. h. die Höhe des Oberflächenspiegels des zweiten Fluids in dem zweiten Strömungsweg. Die Überlaufvorrichtung ist insbesondere so gestaltet und angeordnet, dass das den zweiten Strömungsweg durchströmende zweite Fluid den ersten Strömungsweg vollständig umströmt. Wenn der erste Strömungsweg vollständig unterhalb des Oberflächenspiegels des zweiten Fluids in dem zweiten Strömungsweg liegt, wird der Wärmetransfer zwischen dem ersten und dem zweiten Fluid optimiert.

Zumindest ein Abschnitt des ersten Strömungswegs ist vorzugsweise so gestaltet und angeordnet, dass seine Außenfläche als Koaleszenzelement zur Verbesserung eines Abscheidegrads der Fluidkomponente aus dem zweiten Fluid wirkt. Insbesondere können Außenflächen des Rohrbündels, dessen Innenvolumen den ersten Strömungsweg definiert, als Abscheideoberflächen für die aus dem zweiten Fluid abzuscheidende Fluidkomponente wirken. Kleine Tröpfchen der Fluidkomponente sammeln sich dann an den Außenflächen des Rohrbündels und verbinden sich mit weiteren Tröpfchen zu größeren Tröpfchen. Die größeren Tröpfchen haben mehr Auftrieb und sammeln sich an der Oberfläche des zweiten Fluids, wo sie von der Absaugungvorrichtung abgesaugt werden können.

Bei einem Verfahren zum Betreiben eines insbesondere zum Einsatz in einer Prozesswasserdestillationsanlage vorgesehenen Wärmetauschers wird ein zu erwärmendes erstes Fluid durch einen ersten Strömungsweg geleitet. Ein zu kühlendes zweites Fluid wird durch einen zweiten Strömungsweg geleitet, wobei das zweite Fluid Bestandteile unterschiedlicher spezifischer Dichte enthält und wobei der zweite Strömungsweg zumindest abschnittsweise mit dem ersten Strömungsweg in Wärmekontakt steht. Eine Strömung des zweiten Fluids wird bei der Zufuhr in den zweiten Strömungsweg und/oder beim Durchströmen des zweiten Strömungswegs beruhigt. Dadurch findet dann, da das zweite Fluid Fluidkomponenten unterschiedlicher spezifische Dichte enthält, unter dem Einfluss der Schwerkraft eine Entmischung des zweiten Fluids statt und Fluidkomponenten geringerer spezifischer Dichte, wie z.B. Leichtflüssigkeitströpfchen sammeln sich in Form einer Schwimmschicht an einer Oberfläche des zweiten Fluids. Eine Fluidkomponente, die sich von dem zweiten Fluid abscheidet und auf einer Oberfläche des zweiten Fluids eine Schwimmschicht bildet, während das zweite Fluid in den zweiten Strömungsweg zugeführt wird und/oder den zweiten Strömungsweg durchströmt, wird von der Oberfläche des zweiten Fluids abgesaugt.

Das den zweiten Strömungsweg durchströmende zweite Fluid umströmt vorzugsweise den ersten Strömungsweg. Eine Strömung des zweiten Fluids durch den zweiten Strömungsweg kann durch eine Mehrzahl von Strömungslenkungselementen abgelenkt werden, die bezogen auf eine Hauptströmungsrichtung des zweiten Fluids durch den zweiten Strömungsweg hintereinander und in einer Richtung senkrecht zur Hauptströmungsrichtung des zweiten Fluids durch den zweiten Strömungsweg versetzt zueinander angeordnet sind. Das zweite Fluid kann im Wesentlichen parallel zu einem Oberflächenspiegel des zweiten Fluids in dem zweiten Strömungsweg und/oder im Wesentlichen auf einer Höhe mit einem Oberflächenspiegel des zweiten Fluids in dem zweiten Strömungsweg in den zweiten Strömungsweg zugeführt werden. Zusätzlich dazu kann das zweite Fluid nach dem Durchströmen des zweiten Strömungswegs aus einem Sumpfbereich des zweiten Strömungswegs aus dem zweiten Strömungsweg abgeführt werden.

Das zweite Fluid kann den zweiten Strömungsweg entlang der gesamten Länge des zweiten Strömungswegs in einer gleichbleibenden Hauptströmungsrichtung durchströmen. Alternativ dazu kann die Strömung des zweiten Fluids durch den zweiten Strömungsweg jedoch auch derart umgelenkt werden, dass das zweite Fluid den zweiten Strömungsweg entlang eines ersten Abschnitts des zweiten Strömungswegs in einer ersten Hauptströmungsrichtung und entlang eines zweiten Abschnitts des zweiten Strömungswegs in einer der ersten Hauptströmungsrichtung entgegengesetzten zweiten Hauptströmungsrichtung durchströmt.

In ähnlicher Weise kann das erste Fluid den ersten Strömungsweg entlang der gesamten Länge des ersten Strömungswegs in einer gleichbleibenden Strömungsrichtung durchströmen. Alternativ dazu kann das erste Fluid den ersten Strömungsweg jedoch auch entlang eines ersten Abschnitts des ersten Strömungswegs in einer ersten Strömungsrichtung und entlang eines zweiten Abschnitts des ersten Strömungswegs in einer der ersten Strömungsrichtung entgegengesetzten zweiten Strömungsrichtung durchströmen.

Das aus dem zweiten Strömungsweg abgeführte zweite Fluid kann in einer Aufnahmekammer aufgenommen werden, die mit einem abstromseitigen Bereich des zweiten Strömungswegs verbunden ist. Die Aufnahmekammer kann einen ersten Abschnitt sowie einen stromabwärts des ersten Abschnitts angeordneten und von dem ersten Abschnitt durch eine Überlaufvorrichtung getrennten zweiten Abschnitt umfassen. Die Überlaufvorrichtung kann so gestaltet und angeordnet sein, dass das den zweiten Strömungsweg durchströmende zweite Fluid den ersten Strömungsweg vollständig umströmt.

Des Weiteren können sämtliche oben im Zusammenhang mit der Ausgestaltung des Wärmetauschers beschriebenen Merkmale auch in dem hier beschriebenen Verfahren zum Betreiben eines Wärmetauschers umgesetzt werden.

Eine Prozesswasserdestillationsanlage umfasst einen Verdampfer, einen Kondensator und einen Verdichter, der dazu eingerichtet ist, in zumindest einem Bereich der Prozesswasserdestillationsanlage einen gewünschten Druck zu erzeugen und Dampf aus dem Verdampfer in den Kondensator zu fördern. Ferner umfasst die Prozesswasserdestillationsanlage einen oben beschriebenen Wärmetauscher, wobei im Betrieb der Prozesswasserdestillationsanlage das den ersten Strömungsweg des Wärmetauschers durchströmende zu erwärmende erste Fluid insbesondere zu reinigendes Prozesswasser und das den zweiten Strömungsweg des Wärmetauschers durchströmende zu kühlende zweite Fluid insbesondere aus dem Kondensator austretendes Destillat ist.

Bevorzugte Ausführungsformen der Erfindung werden im Folgenden mit Bezugnahme auf die beigefügten schematischen Zeichnungen näher erläutert, von denen
- Fig. 1: eine Prozesswasserdestillationsanlage zeigt, die einen als Prozesswasservorwärmer/Destillatkühler dienenden Wärmetauscher umfasst,
- Fig. 2: eine Längsschnittansicht des in der Prozesswasserdestillationsanlage gemäß Figur 1 verbauten Wärmetauschers zeigt,
- Fig. 3: eine weitere Längsschnittansicht des Wärmetauschers gemäß Figur 2, geschnitten entlang einer Linie X-X in Figur 2 zeigt,
- Fig.4: eine Querschnittsansicht des Wärmetauschers gemäß Figur 2, geschnitten entlang einer Linie Y-Y in Figur 2 zeigt,
- Fig.5: eine weitere Querschnittsansicht des Wärmetauschers gemäß Figur 2, geschnitten entlang einer Linie Z-Z in Figur 2 zeigt, und
- Fig. 6: eine alternative Ausführungsform eines zum Einsatz in eine Prozesswasserdestillationsanlage gemäß Figur 1 geeigneten Wärmetauschers zeigt.

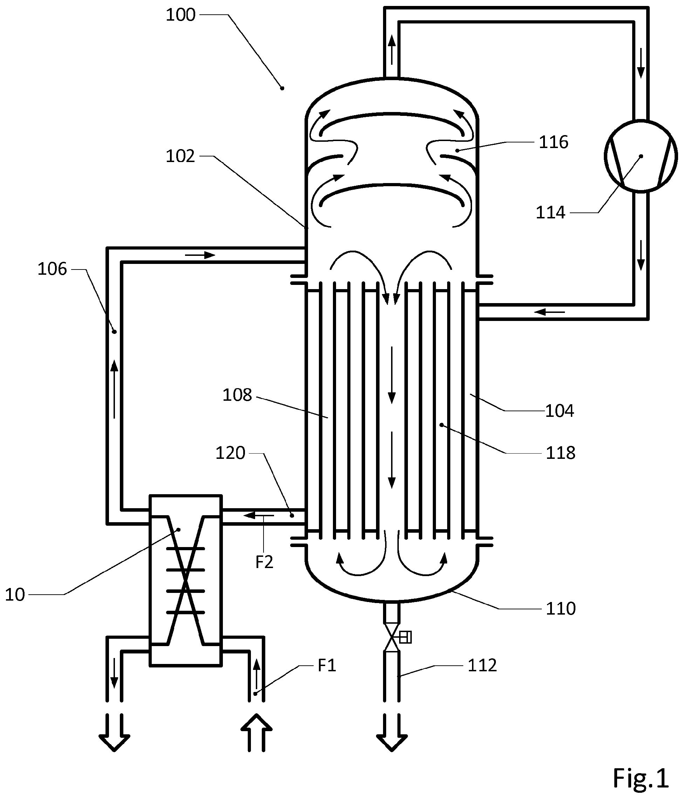

Eine in Figur 1 gezeigte Prozesswasserdestillationsanlage 100 umfasst einen Destillationsbehälter 102, in dem ein Rohrbündel 104 angeordnet ist. Über ein Zufuhrrohr 106 wird zu reinigendes Prozesswasser, das Verunreinigungen wie z.B. Silikone, Siloxane, Glykole, Emulgatoren, Tenside oder Salze sowie Leichtflüssigkeiten, wie z.B. Benzin, Benzol, Schmierstoffe oder Öle enthalten kann, in den Destillationsbehälter 102 zugeführt. In einem Verdampfer 108, der in einem das Rohrbündel 104 aufnehmenden Bereich des Behälters 102 vorgesehen ist, wird das Prozesswasser erwärmt und dabei verdampft, wobei sich schwer flüchtige Verunreinigungen in einem Sumpf 110 des Behälters 102 sammeln und über einen Konzentratablauf 112 aus dem Destillationsbehälter 102 abgeführt werden können. In der hier gezeigten Prozesswasserdestillationsanlage 100 erfolgt die Verdampfung bei einem gegenüber dem Atmosphärendruck verringerten Druck, wobei ein hier als Brüdenverdichter ausgeführter Verdichter 114 für die Einstellung der gewünschten Druckverhältnisse in der Prozesswasserdestillationsanlage 100 sorgt.

In dem Destillationsbehälter 102 aufsteigender Wasserdampf wird durch einen Nebelabscheider 116 geleitet und mittels des Verdichters 114 in einen Kondensator 118 gefördert. Der Kondensator 118 wird durch ein Innenvolumen der Rohre des Rohrbündel 104 definiert. Das in dem Kondensator 118 abgekühlte und dabei kondensierte Destillat wird schließlich durch eine Verbindungsleitung 120 in einen Wärmetauscher 10 geleitet und beim Durchströmen des Wärmetauschers 10 weiter abgekühlt. In dem Wärmetauscher 10 wird das Destillat in Wärmekontakt mit in den Destillationsbehälter 102 der Prozesswasserdestillationsanlage 100 zuzuführendem Prozesswasser gebracht. Der Wärmetauscher 10 wird in der Prozesswasserdestillationsanlage 10 folglich als Prozesswasservorwärmer/Destillatkühler eingesetzt.

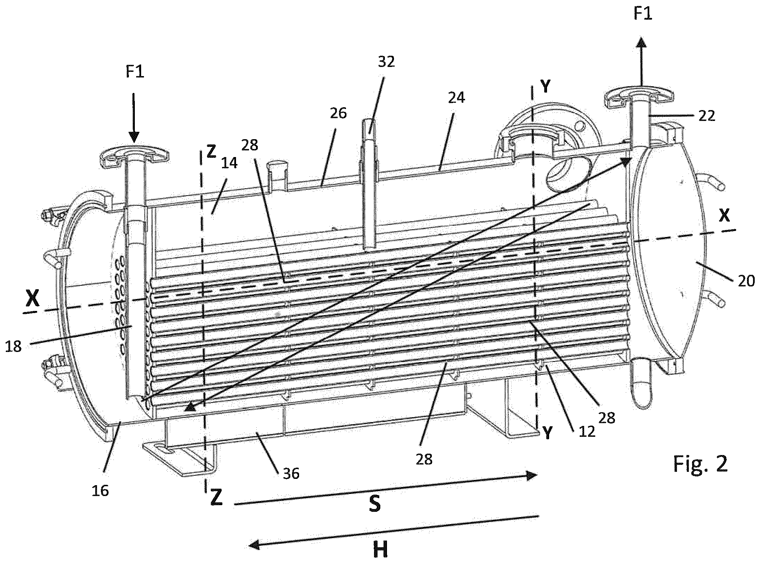

Im Folgenden werden der Aufbau und die Funktionsweise des Wärmetauschers 10 mit Bezugnahme auf die Figuren 2 bis 6 näher beschrieben. Der Wärmetauscher 10 umfasst einen von einem zu erwärmenden ersten Fluid F1 durchströmbaren ersten Strömungsweg 12, der bei dem hier gezeigten Ausführungsbeispiel des Wärmetauschers 10 durch ein Innenvolumen einer Mehrzahl von im Wesentlichen parallel zueinander angeordneter Rohre eines Rohrbündels 14 definiert wird. Wenn der Wärmetauscher 10, wie in Figur 1 gezeigt, in der Prozesswasserdestillationsanlage 100 zum Einsatz kommt, ist das durch den ersten Strömungsweg 12 zu leitende erste Fluid F1 das in der Prozesswasserdestillationsanlage 100 zu reinigende Prozesswasser.

Ein aufstromseitiger Bereich des ersten Strömungswegs 12, d. h. ein Einlassbereich des Rohrbündels 14, ist mit einer Zulaufkammer 16 verbunden. Ein Zulauf 18 des ersten Strömungswegs 12, durch den das erste Fluid F1 in den ersten Strömungsweg 12 geleitet wird, mündet in einen Bodenbereich der Zulaufkammer 16, siehe insbesondere Figur 2. Ein abströmseitiger Bereich des ersten Strömungswegs 12, d. h. ein Auslassbereich des Rohrbündels 14, mündet dagegen in eine Ablaufkammer 20. Ein Ablauf 22 des ersten Strömungswegs 12, durch den das aus dem ersten Strömungsweg 12 austretende erste Fluid F1 in das den Wärmetauscher 10 mit dem Destillationsbehälter 102 der Prozesswasserdestillationsanlage 10 verbindende Zufuhrrohr 106 geleitet wird, ist mit einem oberen Bereich der Ablaufkammer 20 verbunden, siehe insbesondere Figur 2.

Ferner umfasst der Wärmetauscher 12 einen von einem zu kühlenden zweiten Fluid F2 durchströmbaren zweiten Strömungsweg 24, der mit dem ersten Strömungsweg 12 in Wärmekontakt steht. Wenn der Wärmetauscher 10, wie in Figur 1 gezeigt, in der Prozesswasserdestillationsanlage 100 zum Einsatz kommt, ist das durch den zweiten Strömungsweg 24 zu leitende zweite Fluid F2 das aus dem Kondensator 118 der Prozesswasserdestillationsanlage 100 abgeführte Destillat.

Bei dem hier gezeigten Ausführungsbeispiel des Wärmetauschers 10 wird der zweite Strömungsweg 24 durch ein Innenvolumen eines Behälters 26 definiert, in dem der erste Strömungsweg 12, d. h. das Rohrbündel 14, fluidisch von dem durch das Innenvolumen des Behälters 26 definierten zweiten Strömungsweg 24 getrennt angeordnet ist. Eine Vermischung des zweiten Fluids F2 mit dem ersten Fluid F1 ist dadurch ausgeschlossen, das zweite Fluid F2 umströmt jedoch den ersten Strömungsweg 12, d. h. das Rohrbündel 14, sodass im Betrieb des Wärmetauschers 10 ein Wärmetransfer von dem den zweiten Strömungsweg 24 durchströmenden zweiten Fluid F2 an das den ersten Strömungsweg 12 durchströmende erste Fluid F1 erfolgt. Infolgedessen wird das erste Fluid F1 beim Durchströmen des Wärmetauschers 10 erwärmt, wohingegen das zweite Fluid F2 beim Durchströmen des Wärmetauschers 10 gekühlt wird. Eine Hauptströmungsrichtung H des zweiten Fluids F2 durch den zweiten Strömungsweg 24 ist der Strömungsrichtung S des ersten Fluids F1 durch den ersten Strömungsweg 12 entgegen gerichtet. Der Wärmetauscher 10 arbeitet demnach im Gegenstromprinzip.

Der zweite Strömungsweg 24 des Wärmetauschers 10 ist so gestaltet, dass eine Strömung des zweiten Fluids F2 bei der Zufuhr in den zweiten Strömungsweg 24 und/oder beim Durchströmen des zweiten Strömungswegs 24 beruhigt wird. Bei dem hier gezeigten Ausführungsbeispiel des Wärmetauschers 10 weist der durch das Innenvolumen des Behälters 26 definierte zweite Strömungsweg 24 einen größeren Strömungsquerschnitt auf als die Verbindungsleitung 120, durch die das zweite Fluid F2 in den zweiten Strömungsweg 24 des Wärmetauschers 10 geleitet wird. Ferner vergrößert sich eine Oberfläche des zweiten Fluids F2 bei der Zufuhr des zweiten Fluids F2 in den zweiten Strömungsweg 24. Dadurch werden Turbulenzen abgebaut und die Strömungsgeschwindigkeit des zweiten Fluids F2 verringert, sodass insgesamt eine Beruhigung der Strömung des zweiten Fluids F2 erfolgt.

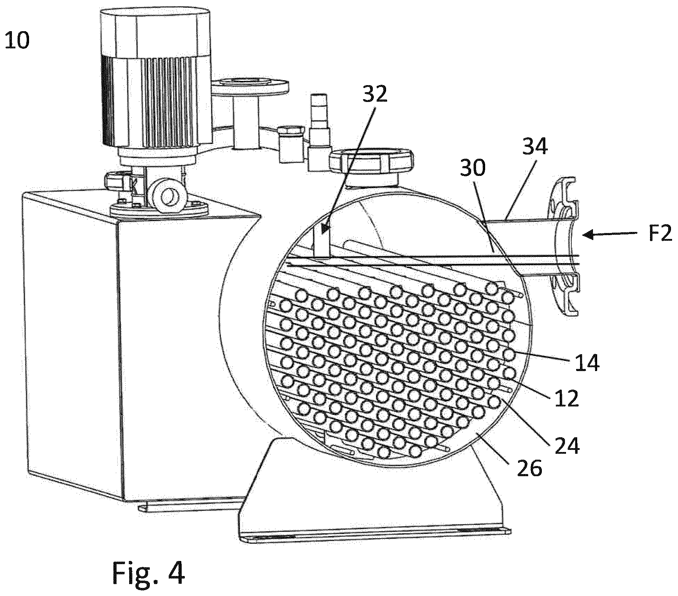

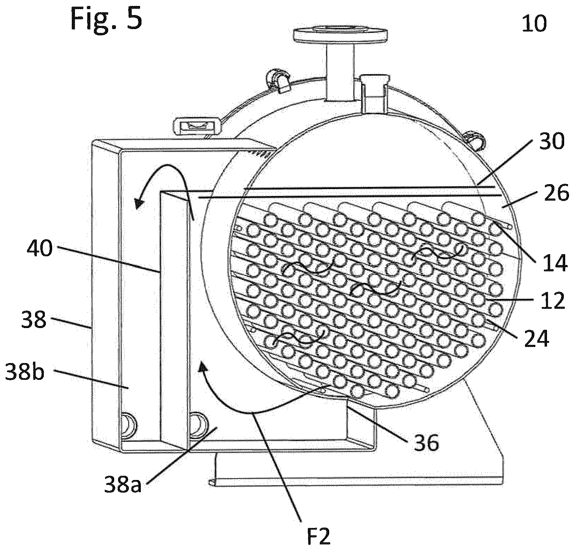

Durch die Beruhigung der Strömung des zweiten Fluids F2 in dem zweiten Strömungsweg 24 erfolgt zumindest dann, wenn das zweite Fluid F2 Fluidkomponenten unterschiedlicher spezifische Dichte enthält, unter dem Einfluss der Schwerkraft eine Entmischung des zweiten Fluids F2. Insbesondere sammeln sich Fluidkomponenten geringerer spezifischer Dichte, wie z.B. Leichtflüssigkeitströpfchen an einer Oberfläche des zweiten Fluids F2 und bilden dort eine Schwimmschicht 30, siehe Figuren 4 und 5. Der erste Strömungsweg 12 ist so gestaltet und angeordnet, dass seine Außenfläche als Koaleszenzelement zur Verbesserung eines Abscheidegrads der von dem zweiten Fluid F2 zu trennenden Fluidkomponente aus dem zweiten Fluid F2 wirkt. Insbesondere dienen Außenflächen des Rohrbündels 14, dessen Innenvolumen den ersten Strömungsweg 12 definiert, als Abscheideoberflächen für die aus dem zweiten Fluid F2 abzuscheidende Fluidkomponente.

Die sich an der Oberfläche des zweiten Fluids F2 in der Schwimmschicht 30 sammelnden Fluidkomponenten werden mittels einer Absaugvorrichtung 32 von Oberfläche des zweiten Fluids F2 in dem zweiten Strömungsweg 24 abgesaugt. In dem hier gezeigten Ausführungsbeispiel des Wärmetauschers 10 umfasst die Absaugvorrichtung 32 eine Sauglanze, die in den zweiten Strömungsweg 24, d. h. den Behälter 26, ragt und auf der Höhe des Oberflächenspiegels des zweiten Fluids F2 in dem zweiten Strömungsweg 24 endet, sodass die sich auf der Oberfläche des zweiten Fluids F2 bildende Schwimmschicht 30 mithilfe der Sauglanze abgesaugt werden kann. Der Wärmetauscher 10 erfüllt folglich nicht nur eine Wärmetauscher-, sondern auch eine Abscheiderfunktion und kann daher in der Prozesswasserdestillationsanlage 100 beispielsweise als kombinierter Wärmetauscher/Abscheider eingesetzt werden, durch den z.B. Leichtflüssigkeiten wie Öl aus dem Destillat abgeschieden werden, die durch den Destillationsprozess nicht oder nicht vollständig aus dem Prozesswasser entfernt werden können

Wie am besten in Figur 4 zu erkennen ist, ist ein Zulauf 34 des zweiten Strömungswegs 24 so gestaltet und angeordnet, dass das in den zweiten Strömungsweg 24 zugeführte zweite Fluid F2 im Wesentlichen parallel zu einem Oberflächenspiegel des zweiten Fluids F2 in dem zweiten Strömungsweg 24 und im Wesentlichen auf einer Höhe mit dem Oberflächenspiegel des zweiten Fluids F2 in dem zweiten Strömungsweg 24 in den zweiten Strömungsweg 24 zugeführt wird. Bei dem hier gezeigten Ausführungsbeispiel des Wärmetauschers 10 mündet der Zulauf 34 des zweiten Strömungswegs 24 in einem aufstromseitigen Bereich des zweiten Strömungswegs 24 in einen oberen Bereich des Behälters 26, so dass sich ein "sanfter", wirbelfreier Einlauf des zweiten Fluids F2 in den zweiten Strömungsweg realisieren lässt.

Ein Ablauf 36 des zweiten Strömungswegs 24 ist dagegen so gestaltet und angeordnet, dass das zweite Fluid F2 nach dem Durchströmen des zweiten Strömungswegs 24 aus einem Sumpfbereich des zweiten Strömungswegs 24 aus dem zweiten Strömungsweg 24 abgeführt wird. Bei dem hier gezeigten Ausführungsbeispiel des Wärmetauschers 10 ist der Ablauf 36 des zweiten Strömungswegs 24 in einem abstromseitigen Bereich des zweiten Strömungswegs 24 in einem Bodenbereich des Behälters 26 angeordnet, siehe Figuren 2 und 5.

Durch eine Kombination eines im Bereich des Oberflächenspiegels des zweiten Fluids F2 in dem zweiten Strömungsweg 24 angeordneten Zulaufs 34 mit einem in dem Sumpfbereich des zweiten Strömungswegs 24 angeordneten Ablauf 36 wird für das zweite Fluid F2 ein in dem Behälter 26 in diagonaler Richtung von oben nach unten durch den verlaufender Wärmestrom W2 realisiert, d. h. das zweite Fluid F2 wird in der durch den Wärmestrom W2 symbolisierten Richtung zunehmend gekühlt. Umgekehrt ergibt sich für das erste Fluid F1 ein Wärmestrom W1, der in dem Behälter 26 in diagonaler Richtung von unten nach oben verläuft, d. h. das erste Fluid F1 wird in der durch den Wärmestrom W1 symbolisierten Richtung zunehmend erwärmt.

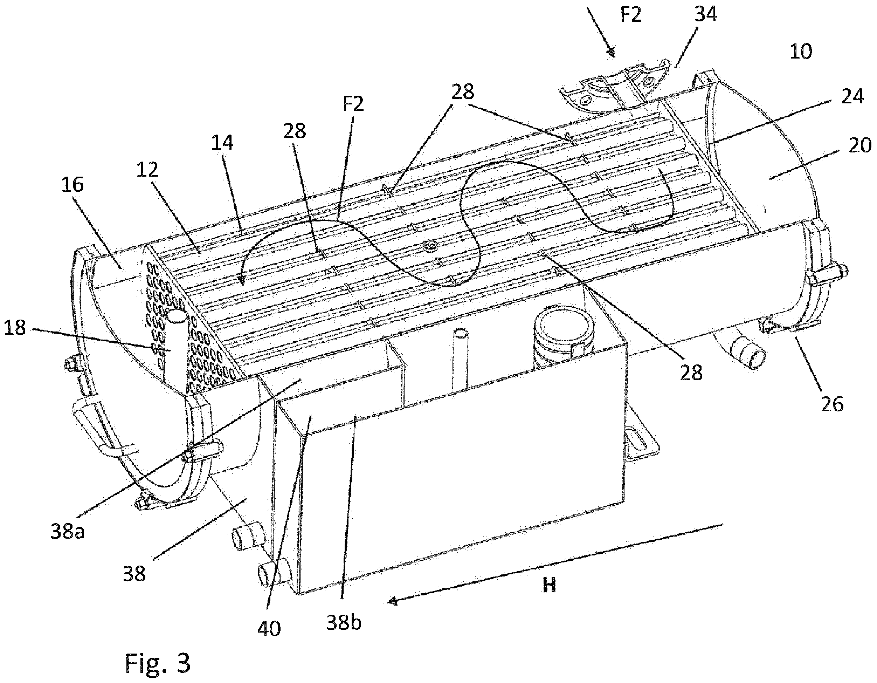

In dem zweiten Strömungsweg 24, d. h. im Inneren des Behälters 26 sind mehrere Strömungslenkungselemente 28 vorgesehen, die bezogen auf die Hauptströmungsrichtung H des zweiten Fluids F2 durch den zweiten Strömungsweg 24 hintereinander und in einer Richtung senkrecht zur Hauptströmungsrichtung H des zweiten Fluids F2 versetzt zueinander angeordnet sind. Durch die Strömungslenkungselemente 28, die hier in Form von plattenförmigen Trennblechen ausgebildet sind, wird eine um die Hauptströmungsrichtung H mäandrierende resultierende Strömung S2 des zweiten Fluids F2 durch den zweiten Strömungsweg 24 erzeugt, siehe insbesondere Figur 3.

Ein abstromseitiger Bereich des zweiten Strömungswegs 24 ist mit einer Aufnahmekammer 38 zur Aufnahme des aus dem zweiten Strömungsweg 24 abgeführten zweiten Fluids F2 verbunden. Die Aufnahmekammer 38 umfasst einen ersten Abschnitt 38a sowie einen stromabwärts des ersten Abschnitts 38a angeordneten zweiten Abschnitt 38b, der durch eine Überlaufvorrichtung 40 von dem ersten Abschnitt 38a getrennt ist, siehe Figur 5. Aus dem zweiten Strömungsweg 24 austretendes zweites Fluid F2 fließt somit stets zunächst in den ersten Abschnitt 38a der Aufnahmekammer 38 und erst anschließend über die Überlaufvorrichtung 40 in den zweiten Abschnitt 38b der Aufnahmekammer 38. Dadurch wird das Niveau des Oberflächenspiegels des zweiten Fluids F2 in dem zweiten Strömungsweg 24, d. h. dem Behälter 26 reguliert. Die Überlaufvorrichtung 40 ist so gestaltet und angeordnet, d. h. eine obere Kante der Überlaufvorrichtung 40 ist in einer derartigen Höhe platziert, dass das den zweiten Strömungsweg 24 durchströmende zweite Fluid F2 den ersten Strömungsweg 12 vollständig umströmt.

Bei der in den Figuren 2 bis 5 veranschaulichten Ausführungsform des Wärmetauschers 10 sind der erste Strömungsweg 12, die Zulaufkammer 16 und die Ablaufkammer 20 so gestaltet und angeordnet, dass das erste Fluid F1 den ersten Strömungsweg 12 entlang der gesamten Länge des ersten Strömungswegs 12 in einer gleichbleibenden Strömungsrichtung S durchströmt. Die Strömungsrichtung S des ersten Fluids F1 durch den ersten Strömungsweg 12 wird dabei durch die Ausgestaltung der Rohre des Rohrbündels 14 vorgegeben. In ähnlicher Weise sind auch der zweite Strömungsweg 24, der Zulauf 34 des zweiten Strömungswegs 24 und der Ablauf 36 des zweiten Strömungswegs 24 so gestaltet und angeordnet, dass das zweite Fluid F2 den zweiten Strömungsweg 24 entlang der gesamten Länge des zweiten Strömungswegs 24 in einer gleichbleibenden Hauptströmungsrichtung H durchströmt.

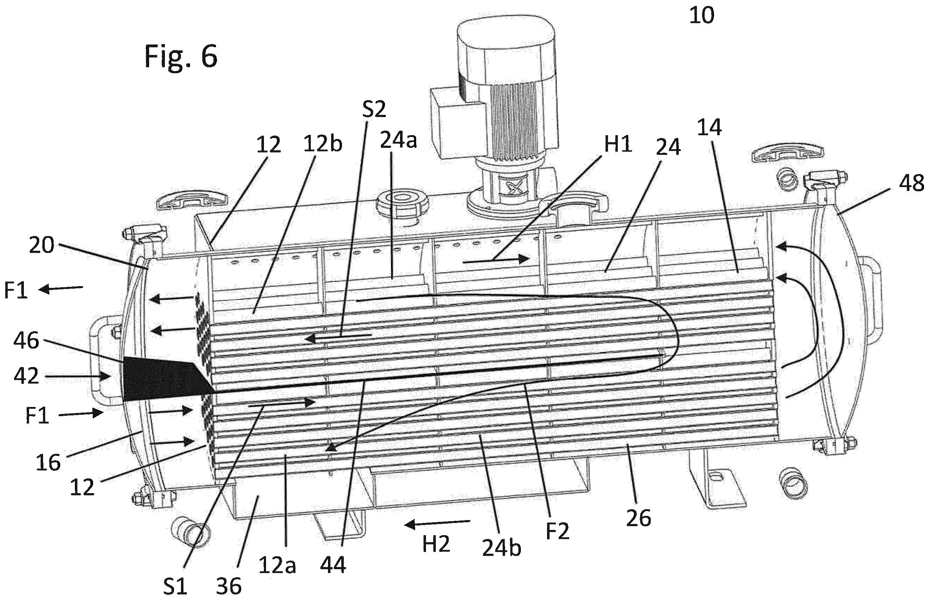

Die in Figur 6 gezeigte Variante des Wärmetauschers 10 unterscheidet sich von der Anordnung gemäß der Figuren 2 bis 5 dadurch, dass in dem zweiten Strömungsweg 12 eine Strömungsumlenkeinrichtung 42 angeordnet sein, die die Strömung des zweiten Fluids F2 durch den zweiten Strömungsweg 24 derart umlenkt, dass das zweite Fluid F2 den zweiten Strömungsweg 24 entlang eines ersten Abschnitts 24a des zweiten Strömungswegs 24 in einer ersten Hauptströmungsrichtung H1 und entlang eines zweiten Abschnitts 24b des zweiten Strömungswegs 24 in einer der ersten Hauptströmungsrichtung H1 entgegengesetzten zweiten Hauptströmungsrichtung H2 durchströmt. Dementsprechend erfolgt bei der in Figur 6 gezeigten Variante des Wärmetauschers 10 eine Umkehr die Hauptströmungsrichtung H des zweiten Fluids F2.

Der Zulauf 34 des zweiten Strömungswegs 24 mündet in einem aufstromseitigen Bereich des ersten Abschnitts 24a des zweiten Strömungswegs 24 in einen oberen Bereich des Behälters 26. Der Ablauf 36 des zweiten Strömungswegs 24 ist dagegen in einem abstromseitigen Bereich des zweiten Abschnitts 24b des zweiten Strömungswegs 24 in einem Bodenbereich des Behälters 26 angeordnet. Die Strömungsumlenkeinrichtung umfasst eine erste Trennplatte 44, die den zweiten Strömungsweg 24 in den ersten Abschnitt 24a und den zweiten Abschnitt 24b unterteilt und einen aufstromseitigen Bereich des ersten Abschnitts 24a des zweiten Strömungswegs 24 und einen abstromseitigen Bereich des zweiten Abschnitts 24b des zweiten Strömungswegs 24 fluidisch voneinander trennt. Ein abstromseitiger Bereich des ersten Abschnitts 24a des zweiten Strömungswegs 24 und ein aufstromseitiger Bereich des zweiten Abschnitts 24b des zweiten Strömungswegs 24 sind dagegen fluidisch miteinander verbundenen. In diesem Bereich des zweiten Strömungswegs 24 findet dann die Strömungsumkehr des zweiten Fluids F2 statt.

Die Betriebsweise des Wärmetauschers 10 im Gegenstromprinzip wird jedoch beibehalten, indem eine entsprechende Umkehr der Strömungsrichtung S des ersten Fluids F1 in dem ersten Strömungsweg 12 erfolgt. Hierzu sind der erste Strömungsweg 12, die Zulaufkammer 16 und die Ablaufkammer 20 so gestaltet und angeordnet, dass das erste Fluid F1 den ersten Strömungsweg 12 entlang eines ersten Abschnitts 12a des ersten Strömungswegs 12 in einer ersten Strömungsrichtung S1 und entlang eines zweiten Abschnitts 12b des ersten Strömungswegs 12 in einer der ersten Strömungsrichtung S1 entgegengesetzten zweiten Strömungsrichtung S2 durchströmt.

Die Zulaufkammer 20 und die Ablaufkammer 22 sind in einer Richtung im Wesentlichen senkrecht zur ersten Strömungsrichtung S1 des ersten Fluids F1 entlang des ersten Abschnitts 12a des ersten Strömungswegs 12 und im Wesentlichen senkrecht zur zweiten Strömungsrichtung S2 des ersten Fluids F1 entlang des zweiten Abschnitts 12b des ersten Strömungswegs 12 übereinander angeordnet. Der erste Abschnitt 12a des ersten Strömungswegs 12 wird demzufolge durch einen unteren Teil des Rohrbündels 14 gebildet, während der zweite Abschnitt 12b des ersten Strömungswegs 12 durch einen oberen Teil des Rohrbündels 14 gebildet wird.

Die Zulaufkammer 16 und die Ablaufkammer 20 sind durch eine einstückig mit der ersten Trennplatte 44 ausgebildete zweite Trennplatte 46 fluidisch voneinander getrennt, sodass verhindert wird, dass das erste Fluid F1 aus der Zulaufkammer 16 in die Ablaufkammer 20 gelangt, ohne den ersten Strömungsweg 12 zu durchströmen. Ein abstromseitiges Ende des ersten Abschnitts 12a des ersten Strömungswegs 12 und ein auftromseitiges Ende des zweiten Abschnitts 12b des ersten Strömungswegs 12 sind jeweils mit einer Strömungsumlenkkammer 48 verbunden, die so gestaltet und angeordnet ist, dass in der ersten Strömungsrichtung S1 aus dem ersten Abschnitt 12a des ersten Strömungswegs 12 in die Strömungsumlenkkammer 48 strömendes erstes Fluid F1 umgelenkt und in der der ersten Strömungsrichtung S1 entgegengesetzten zweiten Strömungsrichtung S2 in den zweiten Abschnitt 12b des ersten Strömungswegs 12 geleitet wird. Die Zulaufkammer 16 und die Ablaufkammer 20 einerseits und Strömungsumlenkkammer 48 andererseits sind folglich mit entgegengesetzten Enden des ersten Strömungswegs 12, d. h. mit entgegengesetzten Enden der Rohre des Rohrbündels 14 verbunden.

Im Übrigen entsprechen der Aufbau und die Funktionsweise des in Figur 6 gezeigten Wärmetauschers 10 dem Aufbau und der Funktionsweise der in den Figuren 2 bis 5 gezeigten Anordnung.

## Patentansprüche

1. Wärmetauscher (10) zum Einsatz in einer Prozesswasserdestillationsanlage (100), der umfasst:
- einen ersten Strömungsweg (12), der dazu eingerichtet ist, im Betrieb der Prozesswasserdestillationsanlage (100) von einem zu erwärmenden ersten Fluid (F1) durchströmt zu werden,
- einen zweiten Strömungsweg (24), der dazu eingerichtet ist, im Betrieb der Prozesswasserdestillationsanlage (100) von einem zu kühlenden zweiten Fluid (F2) durchströmt zu werden, wobei das zweite Fluid (F2) Bestandteile unterschiedlicher spezifischer Dichte enthält, wobei der zweite Strömungsweg (24) zumindest abschnittsweise mit dem ersten Strömungsweg (12) in Wärmekontakt steht und wobei der zweite Strömungsweg (24) so gestaltet ist, dass eine Strömung des zweiten Fluids (F2) bei der Zufuhr in den zweiten Strömungsweg (24) und/oder beim Durchströmen des zweiten Strömungswegs (24) beruhigt wird, und
- eine Absaugvorrichtung (32), die dazu eingerichtet ist, eine Fluidkomponente (FL), die sich von dem zweiten Fluid (F2) abscheidet und auf einer Oberfläche des zweiten Fluids (F2) eine Schwimmschicht (30) bildet, während das zweite Fluid (F2) in den zweiten Strömungsweg (24) zugeführt wird und/oder den zweiten Strömungsweg (24) durchströmt, von der Oberfläche des zweiten Fluids (F2) in dem zweiten Strömungsweg (24) abzusaugen.

2. Wärmetauscher (10) nach Anspruch 1,
wobei
- zumindest ein Abschnitt des zweiten Strömungswegs (24) durch ein Innenvolumen eines Behälters (26) definiert wird, in dem der erste Strömungsweg (12) fluidisch von dem zweiten Strömungsweg (24) getrennt angeordnet ist, sodass das den zweiten Strömungsweg (24) durchströmende zweite Fluid (F2) den ersten Strömungsweg (12) umströmt, und- in zumindest einem Abschnitt des zweiten Strömungswegs (24) eine Mehrzahl von Strömungslenkungselementen (28) vorgesehen ist, die bezogen auf eine Hauptströmungsrichtung (H) des zweiten Fluids (F2) durch den zweiten Strömungsweg (24) hintereinander und in einer Richtung senkrecht zur Hauptströmungsrichtung (H) des zweiten Fluids (F2) durch den zweiten Strömungsweg (24) versetzt zueinander angeordnet sind, und
- ein Zulauf (34) des zweiten Strömungswegs (24) so gestaltet und angeordnet ist, dass das in den zweiten Strömungsweg (24) zugeführte zweite Fluid (F2) im Wesentlichen parallel zu einem Oberflächenspiegel des zweiten Fluids (F2) in dem zweiten Strömungsweg (24) und/oder im Wesentlichen auf einer Höhe mit einem Oberflächenspiegel des zweiten Fluids (F2) in dem zweiten Strömungsweg (24) in den zweiten Strömungsweg (24) zugeführt wird, wobei der Zulauf (34) des zweiten Strömungswegs (24) insbesondere in einem aufstromseitigen Bereich des zweiten Strömungswegs (24) in einen oberen Bereich des Behälters (26) mündet, dessen Innenvolumen zumindest einen Abschnitt des zweiten Strömungswegs (24) definiert, und
- ein Ablauf (36) des zweiten Strömungswegs (24) so gestaltet und angeordnet ist, dass das zweite Fluid (F2) nach dem Durchströmen des zweiten Strömungswegs (24) aus einem Sumpfbereich des zweiten Strömungswegs (24) aus dem zweiten Strömungsweg (24) abgeführt wird, wobei der Ablauf (36) des zweiten Strömungswegs (24) insbesondere in einem abstromseitigen Bereich des zweiten Strömungswegs (24) in einem Bodenbereich des Behälters (36) angeordnet ist, dessen Innenvolumen zumindest einen Abschnitt des zweiten Strömungswegs (24) definiert.

3. Wärmetauscher (10) nach Anspruch 2,
wobei
- der zweite Strömungsweg (24), der Zulauf (34) des zweiten Strömungswegs (24) und der Ablauf (36) des zweiten Strömungswegs (24) so gestaltet und angeordnet sind, dass das zweite Fluid (F2) den zweiten Strömungsweg (24) entlang der gesamten Länge des zweiten Strömungswegs (24) in einer gleichbleibenden Hauptströmungsrichtung (H) durchströmt, oder
- in dem zweiten Strömungsweg (24) eine Strömungsumlenkeinrichtung (42) angeordnet ist, die dazu eingerichtet ist, die Strömung des zweiten Fluids (F2) durch den zweiten Strömungsweg (24) derart umzulenken, dass das zweite Fluid (F2) den zweiten Strömungsweg (24) entlang eines ersten Abschnitts (24a) des zweiten Strömungswegs (24) in einer ersten Hauptströmungsrichtung (H1) und entlang eines zweiten Abschnitts (24b) des zweiten Strömungswegs (24) in einer der ersten Hauptströmungsrichtung (H1) entgegengesetzten zweiten Hauptströmungsrichtung (H) durchströmt.

4. Wärmetauscher (10) nach Anspruch 3,
wobei
- der Zulauf (34) des zweiten Strömungswegs (24) in einem aufstromseitigen Bereich des ersten Abschnitts (24a) zweiten Strömungswegs (24) in einen oberen Bereich des Behälters (36) mündet, dessen Innenvolumen zumindest einen Abschnitt des zweiten Strömungswegs (24) definiert, und
- der Ablauf (36) des zweiten Strömungswegs (24) in einem abstromseitigen Bereich des zweiten Abschnitts des zweiten Strömungswegs (24) in einem Bodenbereich des Behälters (36) angeordnet ist, dessen Innenvolumen zumindest einen Abschnitt des zweiten Strömungswegs (24) definiert, und
- die Strömungsumlenkeinrichtung (42) eine erste Trennplatte (44) umfasst, die den zweiten Strömungsweg (24) in den ersten Abschnitt (24a) und den zweiten Abschnitt (24b) unterteilt, wobei die erste Trennplatte (44) insbesondere so gestaltet und angeordnet ist, dass ein aufstromseitiger Bereich des ersten Abschnitts (24a) des zweiten Strömungswegs (24) und ein abstromseitiger Bereich des zweiten Abschnitts (24b) des zweiten Strömungswegs (24) fluidisch voneinander getrennt sind, und/oder wobei die erste Trennplatte (44) insbesondere so gestaltet und angeordnet ist, dass ein abstromseitiger Bereich des ersten Abschnitts (24a) des zweiten Strömungswegs (24) und ein aufstromseitiger Bereich des zweiten Abschnitts (24b) des zweiten Strömungswegs (24) fluidisch miteinander verbundenen sind.

5. Wärmetauscher (10) nach einem der Ansprüche 1 bis 4,
wobei
- zumindest ein Abschnitt des ersten Strömungswegs (12) durch ein Innenvolumen einer Mehrzahl von im Wesentlichen parallel zueinander angeordneter Rohre definiert wird, und
- eine Strömungsrichtung (S1) des ersten Fluids (F1) durch den ersten Strömungsweg (12) einer Hauptströmungsrichtung des zweiten Fluids (F2) durch den zweiten Strömungsweg (24) entgegengerichtet ist, und
- ein Zulauf (18) des ersten Strömungswegs (12) in einen Bodenbereich einer Zulaufkammer (16) mündet, die mit einem aufstromseitigen Bereich des ersten Strömungswegs (12) verbunden ist, und
- ein Ablauf (22) des ersten Strömungswegs (12) mit einem oberen Bereich einer Ablaufkammer (20) verbunden ist, die mit einem abstromseitigen Bereich des ersten Strömungswegs (12) verbunden ist.

6. Wärmetauscher (10) nach Anspruch 5,
wobei
- der erste Strömungsweg (12), die Zulaufkammer (16) und die Ablaufkammer (20) so gestaltet und angeordnet sind, dass das erste Fluid (F1) den ersten Strömungsweg (12) entlang der gesamten Länge des ersten Strömungswegs (12) in einer gleichbleibenden Strömungsrichtung durchströmt, oder
- der erste Strömungsweg (12), die Zulaufkammer (16) und die Ablaufkammer (20) so gestaltet und angeordnet sind, dass das erste Fluid (F1) den ersten Strömungsweg (12) entlang eines ersten Abschnitts (12a) des ersten Strömungswegs (12) in einer ersten Strömungsrichtung (S1) und entlang eines zweiten Abschnitts (12b) des ersten Strömungswegs (12) in einer der ersten Strömungsrichtung (S1) entgegengesetzten zweiten Strömungsrichtung (S2) durchströmt.

7. Wärmetauscher (10) nach Anspruch 6,
wobei
- die Zulaufkammer (16) und die Ablaufkammer (20) in einer Richtung im Wesentlichen senkrecht zur ersten Strömungsrichtung (S1) des ersten Fluids (F1) entlang des ersten Abschnitts (12a) des ersten Strömungswegs (12) und im Wesentlichen senkrecht zur zweiten Strömungsrichtung (S2) des ersten Fluids (F1) entlang des zweiten Abschnitts (12b) des ersten Strömungswegs (12) übereinander angeordnet sind, und
- die Zulaufkammer (16) und die Ablaufkammer (20) durch eine zweite Trennplatte (46) voneinander getrennt sind, und
- ein abstromseitiges Ende des ersten Abschnitts (12a) des ersten Strömungswegs (12) und ein auftromseitiges Ende des zweiten Abschnitts (12b) des ersten Strömungswegs (12) jeweils mit einer Strömungsumlenkkammer (48) verbunden sind, die so gestaltet und angeordnet ist, dass in der ersten Strömungsrichtung (S1) aus dem ersten Abschnitt (12a) des ersten Strömungswegs (12) in die Strömungsumlenkkammer (42) strömendes erstes Fluid (F1) umgelenkt und in der der ersten Strömungsrichtung (S1) entgegengesetzten zweiten Strömungsrichtung (S2) in den zweiten Abschnitt (12b) des ersten Strömungswegs (12) geleitet wird.

8. Wärmetauscher (10) nach einem der Ansprüche 1 bis 7,
wobei ein abstromseitiger Bereich des zweiten Strömungswegs (24) mit einer Aufnahmekammer (38) zur Aufnahme des aus dem zweiten Strömungsweg (24) abgeführten zweiten Fluids (F2) verbunden ist, wobei die Aufnahmekammer (38) insbesondere einen ersten Abschnitt (38a) sowie einen stromabwärts des ersten Abschnitts (38a) angeordneten und von dem ersten Abschnitt (38a) durch eine Überlaufvorrichtung (40) getrennten zweiten Abschnitt (38b) umfasst, und wobei die Überlaufvorrichtung (40) insbesondere so gestaltet und angeordnet ist, dass das den zweiten Strömungsweg (24) durchströmende zweite Fluid (F2) den ersten Strömungsweg (12) vollständig umströmt.

9. Wärmetauscher (10) nach einem der Ansprüche 1 bis 8,
wobei zumindest ein Abschnitt des ersten Strömungswegs (12) so gestaltet und angeordnet ist, dass seine Außenfläche als Koaleszenzlement zur Verbesserung eines Abscheidegrads der Fluidkomponente (FL) aus dem zweiten Fluid (F2) wirkt.

10. Verfahren zum Betreiben eines insbesondere zum Einsatz in einer Prozesswasserdestillationsanlage (100) vorgesehenen Wärmetauschers (10), mit den Schritten:
- Leiten eines zu erwärmenden ersten Fluids (F1) durch einen ersten Strömungsweg (12),
- Leiten eines zu kühlenden zweiten Fluids (F2) durch einen zweiten Strömungsweg (24), wobei das zweite Fluid (F2) Bestandteile unterschiedlicher spezifischer Dichte enthält, wobei der zweite Strömungsweg (24) zumindest abschnittsweise mit dem ersten Strömungsweg (12) in Wärmekontakt steht, und wobei eine Strömung des zweiten Fluids (F2) bei der Zufuhr in den zweiten Strömungsweg (24) und/oder beim Durchströmen des zweiten Strömungswegs (24) beruhigt wird, und
- Absaugen einer Fluidkomponente (FL), die sich von dem zweiten Fluid (F2) abscheidet und auf einer Oberfläche des zweiten Fluids (F2) eine Schwimmschicht (30) bildet, während das zweite Fluid (F2) in den zweiten Strömungsweg (24) zugeführt wird und/oder den zweiten Strömungsweg (24) durchströmt, von der Oberfläche des zweiten Fluids (F2) in dem zweiten Strömungsweg (24).

11. Verfahren nach Anspruch 10,
wobei
- das den zweiten Strömungsweg (24) durchströmende zweite Fluid (F2) den ersten Strömungsweg (12) umströmt, und
- eine Strömung des zweiten Fluids (F2) durch den zweiten Strömungsweg (24) durch eine Mehrzahl von Strömungslenkungselementen (28) abgelenkt wird, die bezogen auf eine Hauptströmungsrichtung (H) des zweiten Fluids (F2) durch den zweiten Strömungsweg (24) hintereinander und in einer Richtung senkrecht zur Hauptströmungsrichtung (H) des zweiten Fluids (F2) durch den zweiten Strömungsweg (24) versetzt zueinander angeordnet sind, und
- das zweite Fluid (F2) im Wesentlichen parallel zu einem Oberflächenspiegel des zweiten Fluids (F2) in dem zweiten Strömungsweg (24) und/oder im Wesentlichen auf einer Höhe mit einem Oberflächenspiegel des zweiten Fluids (F2) in dem zweiten Strömungsweg (24) in den zweiten Strömungsweg (24) zugeführt wird, und
- das zweite Fluid (F2) nach dem Durchströmen des zweiten Strömungswegs (24) aus einem Sumpfbereich des zweiten Strömungswegs (24) aus dem zweiten Strömungsweg (24) abgeführt wird.

12. Verfahren nach Anspruch 10 oder 11,
wobei
- das zweite Fluid (F2) den zweiten Strömungsweg (24) entlang der gesamten Länge des zweiten Strömungswegs (24) in einer gleichbleibenden Hauptströmungsrichtung durchströmt, oder
- die Strömung des zweiten Fluids (F2) durch den zweiten Strömungsweg (24) derart umgelenkt wird, dass das zweite Fluid (F2) den zweiten Strömungsweg (24) entlang eines ersten Abschnitts (24a) des zweiten Strömungswegs (24) in einer ersten Hauptströmungsrichtung (H1) und entlang eines zweiten Abschnitts (24b) des zweiten Strömungswegs (24) in einer der ersten Hauptströmungsrichtung (H1) entgegengesetzten zweiten Hauptströmungsrichtung (H2) durchströmt.

13. Verfahren nach einem der Ansprüche 10 bis 12,
wobei
- das erste Fluid (F1) den ersten Strömungsweg (12) entlang der gesamten Länge des ersten Strömungswegs (12) in einer gleichbleibenden Strömungsrichtung durchströmt, oder
- das erste Fluid (F1) den ersten Strömungsweg (12) entlang eines ersten Abschnitts (12a) des ersten Strömungswegs (12) in einer ersten Strömungsrichtung (S1) und entlang eines zweiten Abschnitts (12b) des ersten Strömungswegs (12) in einer der ersten Strömungsrichtung (S1) entgegengesetzten zweiten Strömungsrichtung (S2) durchströmt.

14. Verfahren nach einem der Ansprüche 10 bis 13,
wobei das aus dem zweiten Strömungsweg (24) abgeführte zweite Fluid (F2) in einer Aufnahmekammer (38) aufgenommen wird, die mit einem abstromseitigen Bereich des zweiten Strömungswegs (24) verbunden ist, wobei die Aufnahmekammer (38) insbesondere einen ersten Abschnitt (38a) sowie einen stromabwärts des ersten Abschnitts (38a) angeordneten und von dem ersten Abschnitt (38a) durch eine Überlaufvorrichtung (40) getrennten zweiten Abschnitt (38b) umfasst, und wobei die Überlaufvorrichtung (40) insbesondere so gestaltet und angeordnet ist, dass das den zweiten Strömungsweg (24) durchströmende zweite Fluid (F2) den ersten Strömungsweg (12) vollständig umströmt.

15. Prozesswasserdestillationsanlage (100) die umfasst:
- einen Verdampfer (108),
- einen Kondensator (118),
- einen Verdichter (114), der dazu eingerichtet ist, in zumindest einem Bereich der Prozesswasserdestillationsanlage (100) einen gewünschten Druck zu erzeugen und Dampf aus dem Verdampfer (108) in den Kondensator (118) zu fördern, und
- einen Wärmetauscher (10) nach einem der Ansprüche 1 bis 9, wobei im Betrieb der Prozesswasserdestillationsanlage (100) das den ersten Strömungsweg (12) des Wärmetauschers (10) durchströmende zu erwärmende erste Fluid (F1) insbesondere zu reinigendes Prozesswasser und das den zweiten Strömungsweg (24) des Wärmetauschers (10) durchströmende zu kühlende zweite Fluid (F2) insbesondere aus dem Kondensator (118) austretendes Destillat ist.

## Claims

1. Heat exchanger (10) for use in a process water distillation plant (100), comprising:
- a first flow path (12) configured to be flown through with a first fluid (F1) to be heated during operation of the process water distillation plant (100),
- a second flow path (24) configured to be flown through with a second fluid (F2) to be cooled during operation of the process water distillation plant (100), wherein the second fluid (F2) contains components of different specific densities, wherein the second flow path (24), at least in sections, is in thermal contact with the first flow path (12) and wherein the second flow path (24) is designed such that a flow of the second fluid (F2) is calmed upon entry into the second flow path (24) and/or upon flowing through the second flow path (24) , and
- a suction device (32) configured to remove a fluid component (FL) that separates from the second fluid (F2) and forms a floating layer (30) on a surface of the second fluid (F2) while the second fluid (F2) is being supplied into the second flow path (24) and/or is flowing through the second flow path (24) from the surface of the second fluid (F2) in the second flow path (24).

2. Heat exchanger (10) according to claim 1,
wherein
- at least a section of the second flow path (24) is defined by an internal volume of a container (26), in which the first flow path (12) is arranged so as to be fluidically separated from the second flow path (24), such that the second fluid flowing through the second flow path (24) (F2) flows around the first flow path (12), and
- in at least a section of the second flow path (24), a plurality of flow-directing elements (28) are provided, which, relative to a main flow direction (H) of the second fluid (F2) through the second flow path (24) are arranged one after the other and offset relative to one another in a direction perpendicular to the main flow direction (H) of the second fluid (F2) through the second flow path (24), and
- an inlet (34) of the second flow path (24) is designed and arranged such that the second fluid (F2) supplied to the second flow path (24) flows substantially parallel to a surface level of the second fluid (F2) in the second flow path (24) and/or substantially at the same level as a surface level of the second fluid (F2) in the second flow path (24), wherein the inlet (34) of the second flow path (24) opens, in particular in an upstream region of the second flow path (24), into an upper region of the container (26), the internal volume of which defines at least a section of the second flow path (24), and
- an outlet (36) of the second flow path (24) is designed and arranged such that, after flowing through the second flow path (24), the second fluid (F2) is discharged from the second flow path (24) via a sump region of the second flow path (24), wherein the outlet (36) of the second flow path (24) is arranged, in particular, in a downstream region of the second flow path (24) within a bottom region of the container (36), the internal volume of which defines at least a section of the second flow path (24).

3. Heat exchanger (10) according to claim 2,
wherein
- the second flow path (24), the inlet (34) of the second flow path (24), and the outlet (36) of the second flow path (24) are designed and arranged such that the second fluid (F2) flows through the second flow path (24) along its entire length in a constant main flow direction (H), or
- a flow-deflecting device (42) is arranged in the second flow path (24), which is configured to deflect the flow of the second fluid (F2) through the second flow path (24) such that the second fluid (F2) flows through the second flow path (24) along a first section (24a) of the second flow path (24) in a first main flow direction (H1) and along a second section (24b) of the second flow path (24) in a second main flow direction (H) opposite to the first main flow direction (H1).

4. Heat exchanger (10) according to claim 3,
wherein
- the inlet (34) of the second flow path (24), in an upstream region of the first section (24a) of the second flow path (24), opens into an upper region of the container (36), the internal volume of which defines at least a section of the second flow path (24), and
- the outlet (36) of the second flow path (24) is arranged in a downstream region of the second section of the second flow path (24) in a bottom region of the container (36), the internal volume of which defines at least a section of the second flow path (24), and
- the flow diverter (42) comprises a first partition plate (44) that divides the second flow path (24) into the first section (24a) and the second section (24b), wherein the first partition plate (44) is specifically designed and arranged such that an upstream region of the first section (24a) of the second flow path (24) and a downstream region of the second section (24b) of the second flow path (24) are fluidically separated from one another, and/or wherein the first partition plate (44) is specifically designed and arranged such that a downstream region of the first section (24a) of the second flow path (24) and an upstream region of the second section (24b) of the second flow path (24) are fluidically connected to one another.

5. Heat exchanger (10) according to any one of claims 1 through 4,
wherein
- at least one section of the first flow path (12) is defined by an internal volume of a plurality of tubes arranged substantially parallel to one another, and
- a flow direction (S1) of the first fluid (F1) through the first flow path (12) is opposite to a main flow direction of the second fluid (F2) through the second flow path (24), and
- an inlet (18) of the first flow path (12) opens into a bottom region of an inlet chamber (16), which is connected to an upstream region of the first flow path (12), and
- an outlet (22) of the first flow path (12) is connected to an upper region of an outlet chamber (20), which is connected to a downstream region of the first flow path (12).

6. Heat exchanger (10) according to claim 5,
wherein
- the first flow path (12), the inlet chamber (16), and the outlet chamber (20) are designed and arranged such that the first fluid (F1) flows through the first flow path (12) along its entire length in a constant flow direction, or
- the first flow path (12), the inlet chamber (16), and the outlet chamber (20) are designed and arranged such that the first fluid (F1) flows through the first flow path (12) along a first section (12a) of the first flow path (12) in a first flow direction (S1) and along a second section (12b) of the first flow path (12) in a second flow direction (S2) opposite to the first flow direction (S1).

7. Heat exchanger (10) according to claim 6,
wherein
- the inlet chamber (16) and the outlet chamber (20) are arranged in a direction substantially perpendicular to the first flow direction (S1) of the first fluid (F1) along the first section (12a) of the first flow path (12) and substantially perpendicular to the second flow direction (S2) of the first fluid (F1) along the second section (12b) of the first flow path (12), and
- the inlet chamber (16) and the outlet chamber (20) are separated from one another by a second partition plate (46), and
- a downstream end of the first section (12a) of the first flow path (12) and an upstream end of the second section (12b) of the first flow path (12) are each connected to a flow deflection chamber (48), which is designed and arranged such that the first fluid (F1) flowing in the first flow direction (S1) from the first section (12a) of the first flow path (12) into the flow deflection chamber (42) is deflected and directed into the second section (12b) of the first flow path (12) in the second flow direction (S2), which is opposite to the first flow direction (S1).

8. Heat exchanger (10) according to any one of claims 1 through 7,
wherein a downstream region of the second flow path (24) is connected to a receiving chamber (38) for receiving the second fluid (F2) discharged from the second flow path (24), wherein the receiving chamber (38) comprises, in particular, a first section (38a) as well as a second section (38b) arranged downstream of the first section (38a) and separated from the first section (38a) by an overflow device (40), and wherein the overflow device (40) is, in particular, designed and arranged such that the second fluid (F2) flowing through the second flow path (24) completely flows around the first flow path (12).

9. Heat exchanger (10) according to any one of claims 1 through 8,
wherein at least one section of the first flow path (12) is configured and arranged such that its outer surface acts as a coalescence element to improve the separation efficiency of the fluid component (FL) from the second fluid (F2).

10. A method for operating a heat exchanger (10) intended in particular for use in a process water distillation plant (100), comprising the steps of:
- directing a first fluid (F1) to be heated through a first flow path (12),
- directing a second fluid (F2) to be cooled through a second flow path (24), wherein the second fluid (F2) contains components of different specific densities, wherein the second flow path (24) is in thermal contact with the first flow path (12) at least in sections, and wherein a flow of the second fluid (F2) is stabilized upon entry into the second flow path (24) and/or as it flows through the second flow path (24), and
- extracting a fluid component (FL) that separates from the second fluid (F2) and forms a floating layer (30) on a surface of the second fluid (F2), while the second fluid (F2) is being supplied to the second flow path (24) and/or is flowing through the second flow path (24), from the surface of the second fluid (F2) in the second flow path (24).

11. A method according to claim 10,
wherein
- the second fluid (F2) flowing through the second flow path (24) flows around the first flow path (12), and
- a flow of the second fluid (F2) through the second flow path (24) is deflected by a plurality of flow-deflecting elements (28), which, relative to a main flow direction (H) of the second fluid (F2) through the second flow path (24) and are arranged in a direction perpendicular to the main flow direction (H) of the second fluid (F2) through the second flow path (24), and
- the second fluid (F2) is fed into the second flow path (24) substantially parallel to a surface level of the second fluid (F2) in the second flow path (24) and/or substantially at the same level as a surface level of the second fluid (F2) in the second flow path (24), and
- the second fluid (F2) is discharged from the second flow path (24) from a sump area of the second flow path (24) after flowing through the second flow path (24).

12. A method according to claim 10 or 11,
wherein
- the second fluid (F2) flows through the second flow path (24) along the entire length of the second flow path (24) in a constant main flow direction, or
- the flow of the second fluid (F2) through the second flow path (24) is diverted such that the second fluid (F2) flows through the second flow path (24) along a first section (24a) of the second flow path (24) in a first main flow direction (H1) and along a second section (24b) of the second flow path (24) in a second main flow direction (H2) opposite to the first main flow direction (H1).

13. A method according to any one of claims 10 through 12,
wherein
- the first fluid (F1) flows through the first flow path (12) along the entire length of the first flow path (12) in a constant flow direction, or
- the first fluid (F1) flows through the first flow path (12) along a first section (12a) of the first flow path (12) in a first flow direction (S1) and flows along a second section (12b) of the first flow path (12) in a second flow direction (S2) opposite to the first flow direction (S1).

14. A method according to any one of claims 10 through 13,
wherein the second fluid (F2) discharged from the second flow path (24) is received in a receiving chamber (38) connected to a downstream region of the second flow path (24), wherein the receiving chamber (38) comprises, in particular, a first section (38a) as well as a second section (38b) arranged downstream of the first section (38a) and separated from the first section (38a) by an overflow device (40), and wherein the overflow device (40) is, in particular, designed and arranged such that the second fluid (F2) flowing through the second flow path (24) completely flows around the first flow path (12).

15. A process water distillation plant (100) comprising:
- an evaporator (108),
- a condenser (118),
- a compressor (114) configured to generate a desired pressure in at least one section of the process water distillation plant (100) and to convey steam from the evaporator (108) to the condenser (118), and
- a heat exchanger (10) according to one of claims 1 through 9, wherein, during operation of the process water distillation plant (100), the first fluid (F1) to be heated, which flows through the first flow path (12) of the heat exchanger (10), is in particular process water to be purified, and the second fluid (F2) to be cooled, which flows through the second flow path (24) of the heat exchanger (10), is in particular distillate (118).

## Revendications

1. Échangeur de chaleur (10) destiné à être utilisé dans une installation de distillation d'eau de traitement (100), comprenant:
- un premier chemin d'écoulement (12) conçu pour être traversé, lors du fonctionnement de l'installation de distillation d'eau de traitement (100), par un premier fluide (F1) à chauffer,
- un deuxième chemin d'écoulement (24) conçu pour être traversé, lors du fonctionnement de l'installation de distillation d'eau de traitement (100), par un deuxième fluide (F2) à refroidir, dans lequel le deuxième fluide (F2) contient des composants d'épaisseur spécifiques différentes, dans lequel le deuxième chemin d'écoulement (24) est au moins à certains endroits en contact thermique avec le premier chemin d'écoulement (12) et dans lequel le deuxième chemin d'écoulement (24) est conçu de telle sorte qu'un écoulement du deuxième fluide (F2) soit stabilisé lorsqu'il est introduit dans le deuxième chemin d'écoulement (24) et/ou lors de son passage à travers celui-ci, et
- un dispositif d'aspiration (32) conçu pour aspirer un composant fluide (FL) qui se sépare du deuxième fluide (F2) et forme une couche flottante (30) à la surface du deuxième fluide (F2), tandis que le deuxième fluide (F2) est acheminé dans le deuxième chemin d'écoulement (24) et/ou s'écoule à travers le deuxième chemin d'écoulement (24), de la surface du deuxième fluide (F2) dans le deuxième chemin d'écoulement (24).

2. Échangeur de chaleur (10) selon la revendication 1,
dans lequel
- au moins une partie du deuxième chemin d'écoulement (24) est délimitée par un volume intérieur d'un récipient (26), dans lequel le premier chemin d'écoulement (12) est séparé fluidiquement du deuxième chemin d'écoulement (24), de sorte que le deuxième fluide s'écoulant dans le deuxième chemin d'écoulement (24) (F2) contourne le premier chemin d'écoulement (12), et - dans au moins une partie du deuxième chemin d'écoulement (24), une pluralité d'éléments de guidage d'écoulement (28) qui, par rapport à une direction d'écoulement principale (H) du deuxième fluide (F2) à travers le deuxième chemin d'écoulement (24) sont décalés les uns par rapport aux autres dans une direction perpendiculaire à la direction d'écoulement principale (H) du deuxième fluide (F2) à travers le deuxième chemin d'écoulement (24), et
- une entrée (34) du deuxième chemin d'écoulement (24) est conçue et disposée de telle sorte que le deuxième fluide (F2) acheminé dans le deuxième chemin d'écoulement (24) s'écoule sensiblement parallèlement à un niveau de surface du deuxième fluide (F2) dans le deuxième chemin d'écoulement (24) et/ou sensiblement au même niveau qu'un plan de surface du deuxième fluide (F2) dans le deuxième chemin d'écoulement (24), dans lequel l'entrée (34) du deuxième chemin d'écoulement (24) débouche notamment, dans une zone amont du deuxième chemin d'écoulement (24), dans une partie supérieure du récipient (26), dont le volume intérieur délimite au moins une partie du deuxième chemin d'écoulement (24), et
- une sortie (36) du deuxième chemin d'écoulement (24) est conçue et disposée de telle sorte que le deuxième fluide (F2), après avoir traversé le deuxième chemin d'écoulement (24), soit évacué du deuxième chemin d'écoulement (24) d'une zone de fond du deuxième chemin d'écoulement (24), dans lequel la sortie (36) du deuxième chemin d'écoulement (24) est notamment disposée dans une zone en aval du deuxième chemin d'écoulement (24), au niveau du fond du récipient (36) dont le volume intérieur délimite au moins une partie du deuxième chemin d'écoulement (24).

3. Échangeur de chaleur (10) selon la revendication 2,
dans lequel
- le deuxième chemin d'écoulement (24), l'entrée (34) du deuxième chemin d'écoulement (24) et la sortie (36) du deuxième chemin d'écoulement (24) sont conçus et agencés de telle sorte que le deuxième fluide (F2) s'écoule à travers le deuxième chemin d'écoulement (24) sur toute la longueur du deuxième chemin d'écoulement (24) dans une direction d'écoulement principale (H) constante, ou
- dans le deuxième chemin d'écoulement (24) est disposé un dispositif de déviation d'écoulement (42) qui est conçu pour dévier l'écoulement du deuxième fluide (F2) dans le deuxième chemin d'écoulement (24) de telle sorte que le deuxième fluide (F2) s'écoule le long du deuxième chemin d'écoulement (24) sur une première partie (24a) du deuxième chemin d'écoulement (24) dans une première direction d'écoulement principale (H1) et le long d'une deuxième partie (24b) du deuxième chemin d'écoulement (24) dans une deuxième direction d'écoulement principale (H) opposée à la première direction d'écoulement principale (H1).

4. Échangeur de chaleur (10) selon la revendication 3,
dans lequel
- l'entrée (34) du deuxième chemin d'écoulement (24) débouche, dans une zone en amont de la première partie (24a) du deuxième chemin d'écoulement (24), dans une partie supérieure du récipient (36) dont le volume intérieur délimite au moins une partie du deuxième chemin d'écoulement (24), et
- la sortie (36) du deuxième chemin d'écoulement (24) est disposée dans une zone en aval de la deuxième partie du deuxième chemin d'écoulement (24), au niveau du fond du récipient (36) dont le volume intérieur délimite au moins une partie du deuxième chemin d'écoulement (24), et
- le dispositif de déviation d'écoulement (42) comprend une première plaque de séparation (44) qui divise le deuxième chemin d'écoulement (24) en une première partie (24a) et une deuxième partie (24b), dans lequel la première plaque de séparation (44) est notamment conçue et disposée de telle sorte qu'une zone amont de la première partie (24a) du deuxième trajet d'écoulement (24) et une zone aval de la deuxième partie (24b) du deuxième trajet d'écoulement (24) soient séparées fluidiquement l'une de l'autre, et/ou dans lequel la première plaque de séparation (44) est notamment conçue et disposée de telle sorte qu'une zone en aval de la première partie (24a) du deuxième chemin d'écoulement (24) et une zone en amont de la deuxième partie (24b) du deuxième chemin d'écoulement (24) soient reliées fluidiquement entre elles.

5. Échangeur de chaleur (10) selon l'une quelconque des revendications 1 à 4, dans lequel
- au moins une partie du premier chemin d'écoulement (12) est délimitée par le volume intérieur d'une pluralité de tubes disposés de manière sensiblement parallèle les uns aux autres, et
- une direction d'écoulement (S1) du premier fluide (F1) à travers le premier chemin d'écoulement (12) est opposée à une direction d'écoulement principale du deuxième fluide (F2) à travers le deuxième chemin d'écoulement (24), et
- une entrée (18) du premier chemin d'écoulement (12) débouche dans une zone inférieure d'une chambre d'admission (16) qui est reliée à une zone amont du premier chemin d'écoulement (12), et
- une sortie (22) du premier chemin d'écoulement (12) est reliée à une zone supérieure d'une chambre de sortie (20), qui est reliée à une partie aval du premier chemin d'écoulement (12).

6. Échangeur de chaleur (10) selon la revendication 5,
dans lequel
- le premier chemin d'écoulement (12), la chambre d'admission (16) et la chambre de sortie (20) sont conçus et agencés de telle sorte que le premier fluide (F1) s'écoule le long du premier chemin d'écoulement (12) sur toute la longueur du premier chemin d'écoulement (12) dans une direction d'écoulement constante, ou
- le premier chemin d'écoulement (12), la chambre d'admission (16) et la chambre d'évacuation (20) sont conçus et agencés de telle sorte que le premier fluide (F1) s'écoule le long du premier chemin d'écoulement (12) sur une première partie (12a) du premier chemin d'écoulement (12) dans une première direction d'écoulement (S1) et le long d'une deuxième partie (12b) du premier chemin d'écoulement (12) dans une deuxième direction d'écoulement (S2) opposée à la première direction d'écoulement (S1).

7. Échangeur de chaleur (10) selon la revendication 6,
dans lequel
- la chambre d'admission (16) et la chambre d'évacuation (20) dans une direction sensiblement perpendiculaire à la première direction d'écoulement (S1) du premier fluide (F1) le long de la première partie (12a) du premier chemin d'écoulement (12) et sensiblement perpendiculairement à la deuxième direction d'écoulement (S2) du premier fluide (F1) le long de la deuxième partie (12b) du premier chemin d'écoulement (12), et
- la chambre d'admission (16) et la chambre d'évacuation (20) sont séparées l'une de l'autre par une deuxième plaque de séparation (46), et
- une extrémité aval de la première partie (12a) du premier chemin d'écoulement (12) et une extrémité amont de la deuxième partie (12b) du premier chemin d'écoulement (12) sont chacune reliées à une chambre de déviation d'écoulement (48), qui est conçue et disposée de telle sorte que le premier fluide (F1) s'écoulant dans la première direction d'écoulement (S1) depuis la première partie (12a) du premier chemin d'écoulement (12) vers la chambre de déviation d'écoulement (42) soit dévié et dirigé dans la deuxième direction d'écoulement (S2), opposée à la première direction d'écoulement (S1), vers la deuxième partie (12b) du premier chemin d'écoulement (12).

8. Échangeur de chaleur (10) selon l'une quelconque des revendications 1 à 7, dans lequel une zone aval du deuxième chemin d'écoulement (24) est reliée à une chambre de réception (38) pour recevoir le deuxième fluide (F2) évacué du deuxième chemin d'écoulement (24), dans lequel la chambre de réception (38) comporte notamment une première partie (38a) ainsi qu'une deuxième partie (38b) disposée en aval de la première partie (38a) et séparée de la première partie (38a) par un dispositif de débordement (40), et dans lequel le dispositif de débordement (40) est notamment conçu et agencé de telle sorte que le deuxième fluide (F2) s'écoulant à travers le deuxième chemin d'écoulement (24) contourne entièrement le premier chemin d'écoulement (12).

9. Échangeur de chaleur (10) selon l'une quelconque des revendications 1 à 8, dans lequel au moins une partie du premier chemin d'écoulement (12) étant conçue et disposée de telle sorte que sa surface extérieure agisse comme un élément de coalescence destiné à améliorer le taux de séparation du composant fluide (FL) du deuxième fluide (F2).

10. Procédé de fonctionnement d'un échangeur de chaleur (10) destiné notamment à être utilisé dans une installation de distillation d'eau de traitement (100), comprenant les étapes:
- circulation d'un premier fluide (F1) à réchauffer à travers un premier chemin d'écoulement (12),
- circulation d'un deuxième fluide (F2) à refroidir à travers un deuxième chemin d'écoulement (24), dans lequel le deuxième fluide (F2) contient des composants d'épaisseurs spécifiques différentes, dans lequel le deuxième chemin d'écoulement (24) est au moins à certains endroit en contact thermique avec le premier chemin d'écoulement (12), et dans lequel l'écoulement du deuxième fluide (F2) est stabilisé lors de son admission dans le deuxième chemin d'écoulement (24) et/ou lors de son passage à travers le deuxième chemin d'écoulement (24) et
- aspiration d'un composant fluide (FL) qui se sépare du deuxième fluide (F2) et forme une couche flottante (30) à la surface du deuxième fluide (F2), tandis que le deuxième fluide (F2) est acheminé dans le deuxième chemin d'écoulement (24) et/ou s'écoule à travers le deuxième chemin d'écoulement (24), de la surface du deuxième fluide (F2) dans le deuxième chemin d'écoulement (24).

11. Procédé selon la revendication 10,
dans lequel
- le deuxième fluide (F2) s'écoulant dans le deuxième chemin d'écoulement (24) contourne le premier chemin d'écoulement (12), et
- un écoulement du deuxième fluide (F2) à travers le deuxième chemin d'écoulement (24) est dévié par une pluralité d'éléments de déviation d'écoulement (28) qui, par rapport à une direction d'écoulement principale (H) du deuxième fluide (F2) à travers le deuxième chemin d'écoulement (24) sont disposés les uns à la suite des autres et décalés les uns par rapport aux autres dans une direction perpendiculaire à la direction d'écoulement principale (H) du deuxième fluide (F2) à travers le deuxième chemin d'écoulement (24), et
- le deuxième fluide (F2) est introduit dans le deuxième chemin d'écoulement (24) de manière essentiellement parallèle à un plan de surface du deuxième fluide (F2) dans le deuxième chemin d'écoulement (24) et/ou essentiellement au même niveau qu'un plan de surface du deuxième fluide (F2) dans le deuxième chemin d'écoulement (24), et
- le deuxième fluide (F2), après avoir traversé le deuxième chemin d'écoulement (24), est évacué d'une zone de fond du deuxième chemin d'écoulement (24) du deuxième chemin d'écoulement (24).

12. Procédé selon la revendication 10 ou 11,
dans lequel
- le deuxième fluide (F2) s'écoule le long du deuxième chemin d'écoulement (24) sur toute la longueur du deuxième chemin d'écoulement (24), dans une direction d'écoulement principale constante, ou
- l'écoulement du deuxième fluide (F2) dans le deuxième chemin d'écoulement (24) est dévié de telle sorte que le deuxième fluide (F2) s'écoule le long du deuxième chemin d'écoulement (24) sur une première partie (24a) du deuxième chemin d'écoulement (24) dans une première direction d'écoulement principale (H1) et le long d'une deuxième partie (24b) du deuxième chemin d'écoulement (24) dans une deuxième direction d'écoulement principale (H) opposée à la première direction d'écoulement principale (H1).

13. Procédé selon l'une quelconque des revendications 10 à 12,
dans lequel
- le premier fluide (F1) s'écoule le long du premier chemin d'écoulement (12) sur toute la longueur du premier chemin d'écoulement (12), dans une direction d'écoulement constante, ou
- le premier fluide (F1) s'écoule le long du premier chemin d'écoulement (12) sur une première partie (12a) du premier chemin d'écoulement (12) dans une première direction d'écoulement (S1) et le long d'une deuxième partie (12b) du premier chemin d'écoulement (12) dans une deuxième direction d'écoulement (S2) opposée à la première direction d'écoulement (S1).

14. Procédé selon l'une quelconque des revendications 10 à 13,
dans lequel le deuxième fluide (F2) évacué du deuxième chemin d'écoulement (24) étant recueilli dans une chambre de réception (38) qui est reliée à une zone aval du deuxième chemin d'écoulement (24), dans lequel la chambre de réception (38) comporte notamment une première partie (38a) ainsi qu'une deuxième partie (38b) en aval de la première partie (38a) et séparée de la première partie (38a) par un dispositif de débordement (40), et dans lequel le dispositif de débordement (40) est notamment conçu et disposé de telle sorte que le deuxième fluide (F2) s'écoulant dans le deuxième chemin d'écoulement (24) contourne entièrement le premier chemin d'écoulement (12).

15. Installation de distillation d'eau de traitement (100) qui comprend:
- un évaporateur (108),
- un condensateur (118),
- un compresseur (114) conçu pour générer une pression souhaitée dans au moins une zone de l'installation de distillation d'eau de traitement (100) et pour acheminer la vapeur de l'évaporateur (108) vers le condenseur (118), et
- un échangeur de chaleur (10) selon l'une quelconque des revendications 1 à 9, dans lequel, lors du fonctionnement de l'installation de distillation d'eau de traitement (100), le premier fluide (F1) à chauffer, s'écoulant dans le premier chemin d'écoulement (12) de l'échangeur de chaleur (10), est notamment de l'eau de traitement à nettoyer, et le deuxième fluide (F2) à refroidir, s'écoulant dans le deuxième chemin (24) de l'échangeur de chaleur (10), est notamment du distillat sortant du condenseur (118).
